# EUROPÄISCHE PATENTSCHRIFT

(11) **EP 2 880 003 B1**
(45) Veröffentlichungstag und Bekanntmachung des Hinweises auf die Patenterteilung: **07.09.2016**
(21) Anmeldenummer: 13741736.6
(22) Anmeldetag: 24.07.2013
(51) Int. Cl.: C04B 41/49

(54) **HYDROPHOBIERENDES DISPERSIONSGEL MIT VERMINDERTEM WIRKSTOFFGEHALT UND VERFAHREN ZU DESSEN HERSTELLUNG SOWIE DESSEN VERWENDUNG ZUR HYDROPHOBIERUNG MINERALISCHER MATERIALIEN**
HYDROPHOBING DISPERSION GEL HAVING REDUCED ACTIVE INGREDIENT CONTENT, METHOD FOR THE PRODUCTION THEREOF, AND USE THEREOF FOR THE HYDROPHOBING OF MINERAL MATERIALS
GEL À DISPERSION À EFFET HYDROPHOBE PRÉSENTANT UNE TENEUR RÉDUITE EN AGENT ACTIF ET PROCÉDÉ POUR LA PRÉPARATION DUDIT GEL AINSI QU'UTILISATION DU GEL POUR RENDRE HYDROPHOBES DES MATIÈRES MINÉRALES

(30) Priorität: 30.07.2012 DE 102012106887
(43) Veröffentlichungstag der Anmeldung: 10.06.2015
(73) Patentinhaber: Ionys AG, 76344 Eggenstein-Leopoldshafen (DE)
(72) Erfinder: GERDES, Andreas, 76137 Karlsruhe (DE); BALLSCHUH, Detlef, 12524 Berlin (DE); SEIBT, Horst, 13089 Berlin (DE)
(74) Vertreter: Wablat Lange Karthaus
(86) Internationale Anmeldenummer: PCT/EP2013/065608
(87) Internationale Veröffentlichungsnummer: WO 2014/019910

(56) Entgegenhaltungen:
- DE-A1- 19 904 496
- DE-A1-102011 003 975

## Beschreibung

Die vorliegende Erfindung betrifft ein hydrophobierendes Dispersionsgel mit vermindertem Wirkstoffgehalt und ein Verfahren zur Herstellung des hydrophobierenden Dispersionsgels sowie dessen Verwendung zur Hydrophobierung mineralischer Materialien.

Zementgebundene Werkstoffe, wie beispielsweise Stahlbeton, welche sich in Betonbauwerken finden, sind nutzungsbedingt verschiedenen Umwelteinwirkungen ausgesetzt. Von besonderer Bedeutung für die Funktionsfähigkeit und Dauerhaftigkeit dieser Werkstoffe und der daraus hergestellten Bauteile und -werke ist der Widerstand gegen die Aufnahme wässriger Salzlösungen, wie beispielsweise Tausalzen. Das handelsübliche Tausalz besteht zum großen Teil aus Koch- oder Steinsalz, d.h. Natriumchlorid (NaCl). Der Kontakt von Betonbauteilen mit diesen wässrigen Chloridlösungen führt dazu, dass diese durch kapillares Saugen in die Werkstoffrandzone transportiert werden. Erreichen die Chloride die Stahlbewehrung, können unter bestimmten Bedingungen Korrosionsprozesse ausgelöst werden, die bis zum Verlust der Standsicherheit führen.

Um diese Transportprozesse zu unterbinden, ist es bekannt, die Werkstoffrandzone mit siliciumorganischen Verbindungen, so genannten Alkyltrialkoxysilanen (Silane), wasserabweisend (hydrophob) auszurüsten. Dies führt zu einer Imprägnierwirkung gegenüber Wasser oder im Wasser gelösten Elektrolyten, wie beispielsweise Tausalzen. Hydrophobierung bzw. hydrophobierende Imprägnierung bedeutet eine Behandlung des Betons zur Herstellung einer wasserabweisenden Randzone. Die Poren und Kapillaren in der Randzone sind nur ausgekleidet, jedoch nicht gefüllt. Auf der Oberfläche des Betons bildet sich kein geschlossener Film. Das äußere Erscheinungsbild ändert sich dabei wenig oder überhaupt nicht.

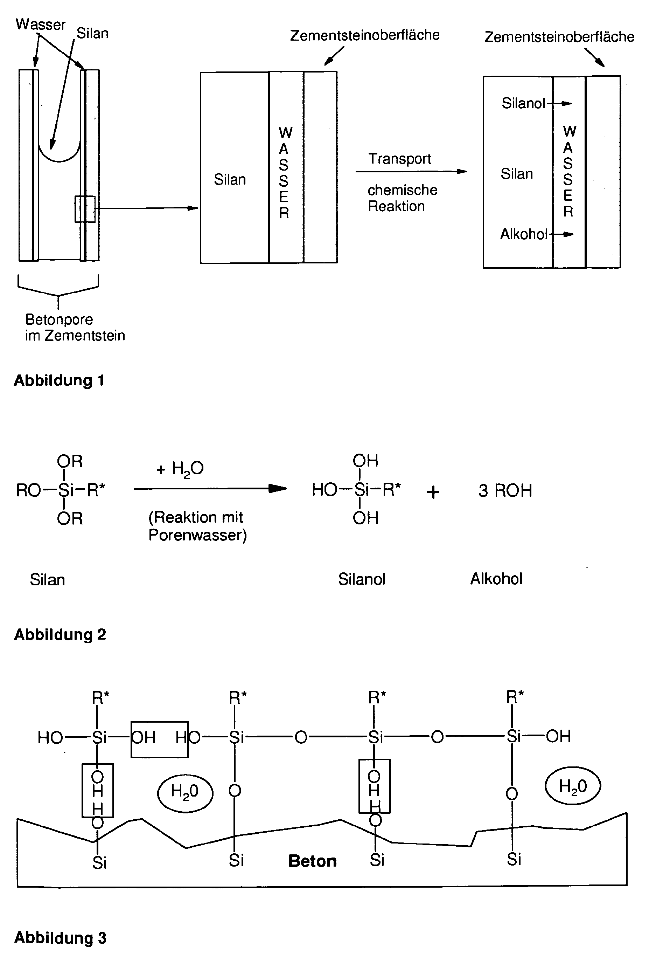

Auf den inneren Oberflächen der Kapillaren von zementgebundenen Werkstoffen bildet sich unter normalen Klimabedingungen ein dünner Wasserfilm aus bzw. die Poren sind mit einer alkalischen Lösung gefüllt (Porenlösung). Die Silane werden unverdünnt oder in Form wässriger Systeme auf die Werkstoffoberfläche appliziert. Von dort werden sie in die Werkstoffrandzone transportiert (siehe Abb. 1).

Während des Transportes finden komplexe chemische Reaktionen statt, wobei sich prinzipiell zwei Teilschritte unterscheiden lassen. Im ersten Schritt findet eine Solvolyse (Hydrolyse) R*Si(OR)₃ + H₂O→R*Si(OH)₃ + 3 ROH statt, die unter Bildung von Silanolen und Alkohol, beispielsweise Ethanol, abläuft (siehe Abb. 2).

Die wasserlöslichen Reaktionsprodukte (Silanol, Alkohol) wandern durch die Grenzfläche Silan/Wasserfilm. Aufgrund ihrer chemischen Struktur setzen diese Komponenten die Grenzflächenspannung herab und beeinflussen so auch den Transport der Silane. Dies bedeutet, dass die chemischen Reaktionen den Transport beeinflussen und der Transport durch Ausbildung lokaler Gleichgewichte die chemischen Reaktionen beeinflusst (reaktiver Transport). Die Silanole reagieren in einem zweiten Schritt untereinander oder mit den endständigen OH-Gruppen des CSH-Gels (Calciumsilikathydrate in kolloidaler Form), welches im Wesentlichen den Zementstein aufbaut. Diese Reaktionen führen zur Ausbildung eines dünnen, hydrophob wirkenden Siliconharzfilms (Polysiloxan) auf den Innenflächen des zementgebundenen Werkstoffes (siehe Abb. 3).

Insgesamt ist die Hydrophobierung ein allgemein anerkannter, leistungsfähiger Oberflächenschutz für durch Feuchtigkeit und die darin enthaltenen Schadstoffe beanspruchten Stahlbetonbauwerke (siehe Regelwerk des deutschen Ausschusses für Stahlbeton (DAfStb) DIN EN 1504-9 Produkte und Systeme für den Schutz und die Instandsetzung von Betontragwerken - Definitionen, Anforderungen, Qualitätsüberwachung und Beurteilung der Konformität - Teil 9: Allgemeine Grundsätze für die Anwendung von Produkten und Systemen; Deutsche Fassung EN 1504-9:2008, Ausgabedatum: 2008-11, Beuth-Verlag, Berlin, DAfStb-Richtlinie - Schutz und Instandsetzung von Betonbauteilen (Instandsetzungs-Richtlinie) - Teil 1: Allgemeine Regelungen und Planungsgrundsätze; Teil 2: Bauprodukte und Anwendung; Teil 3: Anforderungen an die Betriebe und Überwachung der Ausführung; Teil 4: Prüfverfahren, Beuth-Verlag, Ausgabedatum: 2001-10, Beuth-Verlag, Berlin).

Die Wirksamkeit und Dauerhaftigkeit einer Hydrophobierung hängt maßgeblich von der Eindringtiefe und dem Wirkstoffgehalt in der Werkstoffrandzone ab. Beides wird wiederum durch die Kontaktdauer zwischen dem Silan und dem porösen Werkstoff beziehungsweise durch den Verlauf des reaktiven Transports bestimmt. Bei den herkömmlichen Produkten, basierend auf einem unverdünnten Silan (100%iges Silan), ist die Kontaktzeit nur sehr kurz, da diese als niedrigviskose Flüssigkeit an der Werkstoffoberfläche herabläuft bzw. durch die hohe Flüchtigkeit unter praxisnahen Bedingungen (z.B. Oberflächentemperaturen bis ca. 70° C) schnell verdampft. Eindringtiefen von mehr als 2 mm lassen sich bei einer praxisnahen Applikation nicht realisieren (A. Gerdes, Transport und chemische Reaktion siliciumorganischer Verbindungen in der Betonrandzone, Building Materials Report No 15, AEDIFICATIO Verlag, Freiburg i. B., (2001)).

Eine Reihe von Mitteln aus einzelnen oder verschiedenen, oft auch polymeren, Organosiliciumverbindungen sind für die Imprägnierung, Hydrophobierung bzw. Tiefenhydrophobierung von porösen Baustoffen, Betonbauwerken und Stahlbetonkonstruktionen bekannt. Diese Mittel liegen in Form von wässrigen Emulsionen, Cremes, Gelen oder von Zusammensetzungen, welche mineralische Verdickungsmittel enthalten, vor.

Um den Einsatz von organischen Lösungsmitteln zu vermeiden, aber um gleichzeitig den Anteil an Wirkstoff (Silan) zu reduzieren, wurden niedrigviskose, wässrige Systeme, sogenannte Emulsionen, entwickelt. Beispielsweise enthält die im Europäischen Patent EP 0 538 555 B1 beschriebene Emulsion Alkoxysilane, Silantenside, puffernde Substanzen und gegebenenfalls anionische Tenside (Degussa). Nachteilig für diese niedrigviskosen Emulsionen ist eine zu geringe Kontakt- oder Standzeit, beispielsweise an vertikalen Bautenoberflächen oder Brückenunterteilen und ähnlichen Oberflächen. Der Wirkstoff in der Zubereitung benötigt eine gewisse Zeit, um in den mineralischen Baustoffuntergrund einzudringen. Die Emulsion läuft oder tropft zu schnell ab beziehungsweise geht durch Verdunstung an die Umwelt verloren. Auch wurde durch Untersuchungen belegt, dass die Emulsionen bei jungem Beton bereits nach kurzer Zeit brechen. Dann dringt das als Lösungsmittel im Überschuss vorhandene Wasser in den Werkstoff ein und blockiert den Porenraum für das Silan. Bei verschiedenen Formulierungen konnten Eindringtiefen von mehr als 2 mm trotz wiederholter Applikation unter Praxisbedingungen nicht realisiert werden, auch nicht bei Saugversuchen im Labor (A. Gerdes und F.H. Wittmann, Hydrophobieren von Stahlbeton - Teil 1: Transport und chemische Reaktionen siliciumorganischer Verbindungen in der Betonrandzone, Int. Z. Bauinstandsetzen, 9, 41-64 (2003)). Neben der geringen Eindringtiefe ergibt sich als weiterer Nachteil, dass nur eine ungenügende Hydrophobierungsleistung erreicht wird. Die Folge ist eine notwendige Wiederholung der Prozedur. Bei einer Wiederholung tritt allerdings kaum/kein Transport auf, da nun ein wässriges System auf einer hydrophoben Oberfläche vorliegt. Solche Nachbehandlungen sind kostenintensiv und verschwenden darüber hinaus wertvolle Rohstoffe.

Später wurden hochviskose, wasserhaltige Systeme entwickelt, um die Kontaktdauer deutlich zu verlängern. Eines dieser Produkte ist der Typ "Creme", der im Europäischen Patent EP 1 154 971 B1 offenbart wird (Wacker AG). Die wässrige, standfeste Creme wird zur Hydrophobierung von Baustoffen eingesetzt, indem sie auf die Oberflächen mine-ralischer Werkstoffe aufgetragen oder als Bindemittel (direkt dem frischen Mörtel zugegeben) und Grundiermittel in Bautenbeschichtungen verwendet wird. Als hauptsächliche Komponenten der Creme werden C₁-C₂₀-Alkyl-C₂-C₆-alkoxysilane, Alkoxygruppen enthaltende Organo(poly)siloxane, Alkylpolyglycolether oder Polyvinylalkohol als nichtionischer Emulgator und 1 bis 95 Gewichts-% organisches Lösemittel, wie Alkane, Benzinkohlenwasserstoffe, längerkettige Alkohole und Ether, verwendet. Darüber hinaus enthält die Creme als Zusatz noch hydrophobierte hochdisperse Kieselsäure.

Nachteilig bei der Verwendung derartiger Creme-Zusammensetzungen ist die zu geringe Tiefenmigration der Wirkstoffkomponenten. Insbesondere neigen Creme-Emulsionen dazu auf der Oberfläche zu schnell zu brechen, d.h. wässrige und organische Phasen trennen sich. Das gilt im Besonderen für junge Werkstoffe, da bei diesen die Alkalität noch erhalten ist. Das eindringende Wasser bewirkt, dass der Porenraum zumindest partiell blockiert wird. Dadurch wird der Transport des Wirkstoffes in tiefere Bereiche der Werkstoffrandzone verhindert, d.h. eine Eindringtiefe von > 3 mm ist unter praxisnahen Bedingungen nur in wenigen Fällen realisierbar ist. Nach praktischen Erfahrungen sind hier die maximal auftragbaren Mengen 400g/m², da ansonsten ein Abrutschen erfolgt. Entsprechend wird das eigentliche Ziel der Tiefenmigration nicht erreicht, obwohl derartige Cremes auf Grund ihrer Konsistenz höhere Kontaktzeiten haben. Die damit zu erreichenden Eindringtiefen von bis zu 3 mm sind aber nicht ausreichend, um bei sehr hohen Beanspruchungen (z.B. Häfen, Brückenbauwerke, Tiefgaragen) langfristig den Durchbruch der Salzlösung durch die hydrophobierte Randzone zu verhindern, wie Untersuchungen gezeigt haben (A. Gerdes und Z. Huang, Zur Anwendung von Hydrophobierungen für den Schutz von "Off Shore"- Bauwerken, Int. Z. Bauinstandsetzen, 9, 293-306 (2004)).

Höhere Eindringtiefen von 4-6 mm können mit hochviskosen, wasserfreien Produkten ("Gel") realisiert werden. In der Europäischen Patentschrift EP 0 751 922 B1 (Karlsson) wird ein wasserfreies Gel sowie ein Verfahren zur Behandlung von insbesondere Betonbauten mit einer hydrophobierenden Substanz beschrieben (Silane/Siloxane, teilweise Isobutyltriethoxysilan und Ethanol als polares Lösungsmittel).

Die gelartige Zusammensetzung besteht aus der hydrophobierenden Substanz, im Wesentlichen aus lösungsmittelfreien Silanen/Siloxanen, und einem Trägermedium, welches ein organophiles Schichtgittermineral mit Quellverhalten, wie Bentonit oder Montmorillonit ist. Durch Kapillarwirkung zieht die hydrophobierende Substanz in die zu behandelnden mineralischen Materialien ein, während das Trägermedium an der Oberfläche verbleibt. Diese gelartigen, wasserfreien Zusammensetzungen mit organophilen Schichtgittermineralien wie Bentonit als Gelbildner, lassen den Wirkstoff zwar durch längere Kontaktzeiten tiefer in die Werkstoffrandzone eindringen, jedoch zeigen sich auch hier weitere, andersartige Applikationsmängel. Da der Gelbildner als mineralischer Festkörper nicht in die Behandlungsoberfläche eindringen kann, hinterlässt er dort unerwünschte Verfärbungen, was beispielsweise für Sichtbetonoberflächen problematisch ist. Andererseits verbleibt ein beträchtlicher Wirkstoffanteil im organophilen Schichtgittermineral ungenutzt zurück, der somit für die Applikation verloren geht und darüber hinaus unkontrolliert in die Umwelt gelangt. Auch ist der Verbrauch um eine Eindringtiefe von mindestens 6 mm zu erreichen mit 800-1000 g/m² verhältnismäßig hoch, zumal da der Silangehalt etwa ca. 90 % beträgt.

Neben der Formulierung von Oberflächenschutzsystemen, die allein auf der Verwendung von siliciumorganischen Verbindungen basieren, wurden auch Kombinationsprodukte entwickelt. So beschreibt die Degussa AG in der Europäischen Patentanmeldung EP 1 308 428 A2 eine wässrige Emulsion, basierend auf siliciumorganischen Verbindungen, sowie ein Verfahren zum Schutz von Stahlbeton gegen Korrosion der Stahlbewehrung. Das Mittel wird entweder auf eine Stahlbetonoberfläche aufgebracht oder dem Beton während des Herstellprozesses beigemischt. Die wässrige Emulsion enthält als wesentliche Komponenten neben mindestens einem Organosilan oder Organosiloxan oder Partialkondensaten davon, weiterhin noch Aminoalkylsilane oder -siloxane, Erdalkalisalze der Dinonylnaphthalinsulfonsäure sowie Aminoalkohole, wie Dimethylaminoethanol oder Diethylaminoethanol. Als zusätzliche Komponenten sind im Mittel noch Diisotridecyladipat, Mineralöl, Benzinkohlenwasserstoffe, Alkohole, Wasser, Emulgatoren, Rheologiehilfsstoffe und Verdickungshilfsmittel enthalten. Bei der nachträglichen Applikation wird die Emulsion beispielsweise durch Streichen in einer Menge von mehr als 50 g/m² bis mehr als 200g/m² auf die Betonoberfläche aufgetragen. Hinsichtlich der Eindringtiefe und damit der Wirksamkeit dieses Systems sind aber erhebliche Zweifel angebracht, da für einen Korrosionsschutz der entsprechende Wirkstoff die Bewehrung erreichen muss. Als Grund hierfür lässt sich die Feuchteverteilung in massiven Bauteilen, die der Umwelt ausgesetzt sind, anführen. Vielmehr können ungleichmäßige Bewehrungsüberdeckungen zu einer Erhöhung des Korrosionsrisikos aufgrund der Bildung von Lokalelementen führen. Aufgrund der Wechselwirkungen zwischen der Zementsteinphase und den chemischen Verbindungen (Sorption) sowie der unter realen Bedingungen zu erwartenden Feuchteverteilung in der Betonrandzone (hohe Wassersättigung im Abstand von ca. 1-2 cm) sind keine hohen Eindringtiefen zu erwarten.

Insgesamt weisen alle bisher bekannten Systeme Mängel wie Materialverluste beziehungsweise hohe Materialkosten (notwendige Mehrfachanwendung) und insbesondere zu geringe Kontaktzeiten und zu geringe Eindringtiefen, sowie ein Verbleiben von zumindest unansehnlichen Rückständen auf den behandelten Oberflächen auf. Selbst Gel- und Creme-Zusammensetzungen, welche auf Grund ihrer Konsistenz längere Kontaktzeiten mit größeren Eindringtiefen ergeben, ermöglichen keine Tiefenmigration der Wirkstoffkomponenten oder ermöglichen diese nur bei einem unverhältnismäßig großen Materialaufwand.

Die Anforderungen an Produkte und Systeme für den Schutz und die Instandsetzung von Betontragwerken werden in der Norm EN 1504 (in Deutschland DIN EN 1504) geregelt. Bezüglich einer Hydrophobierung wird zwischen den Klassen I und II unterschieden, wobei die Klasse I durch eine Eindringtiefe von < 10 mm und die Klasse II durch eine Eindringtiefe des Hydrophobierungsmittels von ≥ 10 mm gekennzeichnet ist.

Derartige Eindringtiefen hängen allerdings stark von der Beschaffenheit des Materials, vor allem von der Porosität und der Wassersättigung ab. Die Permeabilität des Betons nimmt exponentiell mit dem Wasserzementwert W/Z-Wert zu. Der W/Z-Wert beträgt für bewehrte Betone im Allgemeinen zwischen 0,4 und 0,6. Der für die Tests nach EN 1504 erforderliche Beton ist allerdings mit einem W/Z-Wert von 0,7 deutlich poröser und aufnahmefähiger als praxisübliche Betone (En 1504-2: Produkte und Systeme für den Schutz und die Instandsetzung von Betontragwerken - Definitionen, Anforderungen, Qualitätsüberwachung und Beurteilung der Konformität - Teil 2: Oberflächenschutzsysteme für Beton; Ausgabedatum: 2005-01, Beuth-Verlag, Berlin)).

Zum Ausgleich dieser Abweichungen wird nachfolgend unter einer Tiefenhydrophobierung eine wirksame Eindringtiefe von ≥ 6 mm verstanden. "Wirksame Eindringtiefe" bedeutet, dass in der entsprechenden Tiefe des behandelten Materials ausreichend Wirkstoff vorhanden ist, um kapillares Saugen um mehr als 90% im Vergleich zu unbehandeltem Material zu reduzieren. Dafür ist ein silanabhängiger Mindestwirkstoffgehalt notwendig. Für auf Isooctyltriethoxysilan basierendes Produkt sind hierfür mindestens 3 mg des finalen Polysiloxans pro Gramm Beton in der entsprechenden Tiefe erforderlich. Dies lässt sich auf andere Silane bzw. daraus resultierende Polysiloxane analog übertragen.

Eine Tiefenhydrophobierung ist insbesondere erforderlich für Bauwerke, die besonders exponiert sind, beispielsweise Häfen oder Brückenpfeiler. Bei anderen Anwendungen, beispielsweise bei Widerlagern von Brücken, welche eine größere Entfernung von der Strasse aufweisen, genügen auch geringere Eindringtiefen (3-4 mm) und niedrigere Wirkstoffgehalte in der entsprechenden Tiefe (> 2 mg/g Beton).

Von den Erfindern der vorliegenden Anmeldung stammt ebenfalls die deutsche Patentanmeldung DE 10 2011 003 975.9 (Anmeldetag 11.02.2011), welche sich ebenfalls auf ein Hydrophobierungsgel bezieht. Dieses Gel weist bezogen auf eine Gesamtmenge von 100 Gew.-% die Komponenten:
(A) 50 - 80 Gew.-% Alkyltrialkoxysilan,
(B) 0,3 - 1,0 Gew.-% verzweigte Polyacrylsäure,
(C) 0,5 - 2,0 Gew.-% nicht-tensidisches Aminoxid,
(D) 0,2 - 1,0 Gew.-% tensidisches Aminoxid,
(E) 5,0 - 12 Gew.-% nichtionisches Tensid und
(F) 8,0 - 40 Gew.-% Wasser auf.

Bei dieser Erfindung wurde noch davon ausgegangen, dass ein Alkyltrialkoxysilan-Gehalt von mehr als 50 Gew.-% zwingend erforderlich ist, um stabile Systeme mit ausreichender Eindringtiefe zu erhalten. Entsprechende Systeme mit einem niedrigeren Alkyltrialkoxysilan-Gehalt ergaben ungenügende Eindringtiefen und erwiesen sich als instabil. Für die Stabilisierung dieser Systeme war es weiterhin zwingend erforderlich, eine Kombination aus tensidischem (Komponente D) und nicht-tensidischem (Komponente C) Aminoxid, einzusetzen. Unter einem Aminoxid ist ein Trialkyl-Amin-N-oxid zu verstehen. Beide Begriffe werden nachfolgend synonym verwendet. Diese Systeme der DE 10 2011 003 975.9 sind insbesondere geeignet für die Tiefenhydrophobierung und sind somit bestens geeignet für die Behandlung von Bauwerken, die besonders exponiert sind (z.B. Häfen oder Brückenpfeiler).

Ein derart hoher Gehalt von 50 oder mehr Gew.-% an Alkyltrialkoxysilan ist allerdings wirtschaftlich aufgrund der Kosten in hohem Maße unerwünscht, zumal Eindringtiefen > 6 mm nur bei einer starken Belastung durch werkstoffaggressive Lösungen notwendig sind. Weiterhin erschwerend kommt die Gesamtzahl von sechs Komponenten hinzu. Bei einer Fehlapplikation, d.h. bei einer Anwendung bei tiefen Temperaturen auf mit Wasser teilgesättigten Betonen kann es bei erhöhten Wirkstoffgehalten zur Bildung klebriger silikonharzfilmen auf der Werkstoffoberfläche kommen. Auf diesen klebrigen Filmen lagern sich dann Staub- bzw. Rußpartikel ab, welche die Oberflächen optisch beeinträchtigen. Diese Verunreinigungen lassen sich nur aufwendig mechanisch entfernen. Bei Anwendungen an weniger exponierten Materialien, beispielsweise bei Widerlagern von Brücken, wären geringere Eindringtiefen (≥3 mm) und niedrigere Wirkstoffgehalte in der entsprechenden Tiefe (> 2 mg/g zu behandelndes Material bei auf Isooctyltriethoxysilan basierenden Polyiloxanen) für eine Hydrophobierung ausreichend/erforderlich.

Aufgabe der vorliegenden Erfindung war es daher, ein Mittel zur Hydrophobierung mineralischer Materialien bereitzustellen, das mit geringeren Konzentrationen des Alkyltrialkoxysilans (A) und mit weniger Komponenten formuliert werden kann und auch die oben genannten Nachteile überwindet.

Diese Aufgabe wird mit einem hydrophobierenden Dispersionsgel gemäß Anspruch 1, so-wie durch ein Herstellungsverfahren gemäß Anspruch 10 und eine Verwendung gemäß Anspruch 11 gelöst. Weitere bevorzugte Ausführungsformen ergeben sich aus den abhängigen Ansprüchen.

In anderen Worten wird die Aufgabe durch ein hydrophobierendes Dispersionsgel gelöst, welches bezogen auf eine Gesamtmenge von 100 Gew.-% die Komponenten:
(A) 0,1 - weniger als 50 Gew.-% Alkyltrialkoxysilan,
(B) 0,1 - 1,0 Gew.-% verzweigte Polyacrylsäure,
(C) 0,5 - 2,0 Gew.-% Trialkyl-Amin-N-oxid,
(D) 3,0 - 10 Gew.-% nichtionisches Tensid und
(E) 10 - 80 Gew.-% Wasser aufweist, wobei die Komponenten (C) und (D) nachfolgend noch genau definiert sind.

Der Ausdruck "weniger als 50 Gew.%" Alkyltrialkoxysilan bedeutet, dass 50,0 Gew.-% nicht umfasst sind.

Mit diesem erfindungsgemäßen hydrophobierenden Dispersionsgel, welches weniger als 50 Gew.-% Alkyltrialkoxysilan aufweist, werden Eindringtiefen von ≥ 3 mm mit einem Wirkstoffgehalt in dieser Tiefe (3-4 mm) von > 2 mg/g behandeltem Material realisiert. Im Vergleich benötigt die hochviskose Emulsion ("Wacker-Creme") Wirkstoffgehalte in der Größenordnung von 80-90 Gew.%.

Die erfindungsgemäßen Dispersionsgele weisen insbesondere im Vergleich zu den Systemen mit 50 oder mehr Gew.-% Komponente (A) eine deutlich verbesserte Einbaubarkeit der Komponenten in das hydrophile Gel [Erläuterung zum Begriff "hydrophiles Gel" nachfolgend, beispielsweise im Abschnitt "Aufbau/Struktur des hydrophobierenden Dispersionsgels"
hydrophiles Gel ≙ Aminoxid (C), verzweigte Polyacrylsäure (B), Teil des Wassers (E)] auf und sind im direkten Vergleich deutlich stabiler. Weiterhin ist hervorzuheben, dass nur fünf Komponenten genutzt werden müssen, d.h. dass im Vergleich zur DE 10 2011 003 975.9 das tensidische Aminoxid entfällt.

Ein "Dispersionsgel" bezeichnet ein feindisperses (kolloidales) System aus mindestens einer festen Phase und einer flüssigen Phase. Die feste Phase liegt in Form eines schwammartigen, dreidimensionalen hydrophilen Netzwerkes vor, in welchem die flüssige Phase (eine Öl-in-Wasser-Emulsion) aufgenommen ist. Die Gele befinden sich hinsichtlich ihrer mechanischen Eigenschaften in einem fest-ähnlichen (solid-like) Zustand. Ein solcher Zustand zeichnet sich durch gleichmäßig im gesamten System verteilte Komponenten aus. Diese erfindungsgemäßen Dispersionsgele sind reaktionsfähig und wirken entsprechend hydrophobierend auf den Oberflächen, auf denen sie aufgetragen werden. Die erfindungsgemäßen Dispersionsgele weisen Viskositäten von 3.500 bis 6.000 mPa s, vorzugsweise von 4.000 bis 5.000 mPa s, auf.

Vorzugsweise ist die Komponente (A) in 5,0 bis weniger als 50 Gew.-% enthalten, wobei die Gesamtmenge aller Komponenten 100 Gew.-% ist.

Dieser bevorzugte Bereich lässt sich je nach geplanter Anwendung in zwei weiter bevorzugte Bereiche unterteilen:
1) für die Anwendung bei Ziegel, Naturstein, Porenbeton, Betonwerkstein, ist bevorzugt, dass die Komponente (A) in 5,0-30 Gew.-% enthalten ist, wobei die Gesamtmenge aller Komponenten 100 Gew.-% ist.
2) für die Anwendung bei Beton ist bevorzugt, dass die Komponente (A) in 30 bis weniger als 50 Gew.-% enthalten ist, wobei die Gesamtmenge aller Komponenten 100 Gew.-% ist.
   Bei Ziegel, Naturstein und Porenbeton geht es in erster Linie um das Verhindern des Eindringens von Regenwasser. Bei Regen wirkt dieser auf die Fassadenoberfläche ein und wird von dort durch kapillares Saugen in den Werkstoff transportiert. Damit verbunden ist eine erhebliche Herabsetzung der Wärmedämmeigenschaften des Werkstoffes, wie auch die praktische Erfahrung zeigt, wonach Räume mit feuchten Wänden nicht warm werden. Neben der Nutzungseinschränkung bedeutet dies auch einen deutlichen erhöhten Energieverbrauch. Im Gegensatz dazu zeichnen sich diese Werkstoffe im Vergleich zu Hochleistungsbetonen durch eine andere Porenstruktur aus. Die Gesamtporosität ist höher, die Porengrößenverteilung zu gröberen Poren hin verschoben. Insgesamt ist hier die innere Oberfläche des Werkstoffes vergleichsweise niedriger, die notwendige Menge an Wirkstoff zur Hydrophobierung daher geringer. Daher reichen auch geringere Wirkstoffkonzentrationen in den Produkten aus.
   Bei den Betonwerksteinen ist die Porosität ebenfalls deutlich höher, verglichen mit Konstruktionsbeton. Durch den Einsatz des Hydrophobierungsmittels soll auch nicht das Eindringen von Chloriden verhindert werden, da diese Baustoffe nicht bewehrt sind. Chloridinduzierte Korrosion der Bewehrung stellt daher auch nicht ein Risiko dar. Vielmehr soll die Frostbeständigkeit auf diesem Weg erhöht werden, so dass auch bei Betonwerkstein geringere Wirkstoffkonzentrationen in den Produkten ausreichen.
   Bei Beton (Konstruktionsbeton) soll durch die Hydrophobierung bei bewehrten, konstruktiv relevanten Bauteilen der Eindringwiderstand gegen chloridinduzierte Korrosion signifikant verbessert werden. Bei einer wirksamen Hydrophobierung wird die Wasseraufnahme praktisch unterbunden. Dafür ist aber ein höherer Wirkstoffgehalt notwendig, da durch das Porengefüge der Anteil an zu hydrophobierender Kapillarporenfläche höher ist.

Vorzugsweise enthält das hydrophobierende Dispersionsgel zusätzlich 0,1-50 Gew.-% Alkohol, wobei die Gesamtmenge aller Komponenten 100% ergibt und wobei der Alkohol allein oder in Mischung vorliegt und ausgewählt ist aus der Gruppe der zweiwertigen C2-C6-Alkohole, vorzugsweise Ethylenglykol, 1,2-Propandiol, 1,3-Propandiol, 1,2-Butandiol oder 2,3-Butandiol, dreiwertigen C3-C6-Alkoholen, vorzugsweise Glycerin, und Etheralko-holen, vorzugsweise Diethylenglykol, Triethylenglykol, Ethylenglykolmonoethylether, Diethylenglykolmonoethylether, Dipropylenglykolmonomethylether, Polyethylenglykole oder Polypropylenglykole.

Das Alkyltrialkoxysilan (A) liegt allein oder in Mischung aus mehreren Alkyltrialkoxylsilanen oder als Partialkondensat eines oder mehrerer Alkyltrialkoxylsilane vor.

Das Alkyltrialkoxysilan (A) kann als Alkylgruppe unverzweigte oder verzweigte C1-C16-Alkylgruppen aufweisen, welche vorzugsweise ausgewählt sind aus Methyl-, Ethyl-, n-Propyl-, iso-Propyl-,n-Butyl-, iso-Butyl-, n-Pentyl-, iso-Pentyl-, n-Hexyl-, iso-Hexyl-, n-Octyl-, isoOctyl-, n-Decyl-, iso-Decyl-, n-Dodecyl-, iso-Dodecyl-, n-Tetradecyl-, iso-Tetradecyl-, Hexadecyl- und iso-Hexadecylgruppen, wobei eine iso-Octylgruppe (2,4,4-TrimethylpentylRest) besonders bevorzugt ist. Als Alkyoxygruppen können gleiche oder verschiedene unverzweigte oder verzweigte C1-C6-Alkoxygruppen enthalten sein, welche vorzugsweise ausgewählt sind aus Methoxy-, Ethoxy-, n-Propoxy-, iso-Propoxy-, n-Butoxy-, iso-Butoxy-, n-Pentoxy-, oder n-Hexoxygruppen, wobei Ethoxygruppen besonders bevorzugt sind. In einer besonders bevorzugten Ausführungsform ist das Alkyltrialkoxysilan (A) (2,4,4- Trimethyl-pentyl)-triethoxysilan.

Die verzweigte Polyacrylsäure (B) kann ein vernetztes Copolymer der Acrylsäure sein, wobei es sich vorzugsweise um mit Pentaerythrittriallylether vernetzte Polyacrylsäure handelt. In anderen Worten ist die verzweigte Polyacrylsäure (B) ein Interpolymer der Acrylsäure, das mit Pentaerythrittriallylether vernetzte Polyacrylsäure darstellt. Insbesondere eignet sich als Komponente (B) verzweigte Polyacrylsäure, die auch unter dem Handelsnamen Carbopol® von der Firma Lubrizol vertrieben wird. Besonders bevorzugt ist der Einsatz von Carbopol ETD 2020.

Das Trialkyl-Amin-N-oxid (C) ist ein Aminoxid der allgemeinen Formel I, 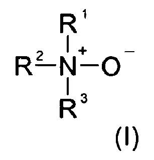
wobei R¹, R² und R³ jeweils unabhängig voneinander gleich oder verschieden sind und ausgewählt sind aus C₁-C₆-Alkylgruppen, welche unsubstituiert oder mit einer oder mehreren Hydroxylgruppen substituiert sind, wobei gegebenenfalls zwei der Reste R¹, R² und R³ miteinander einen gesättigten Ring bilden, welcher gegebenenfalls ein weiteres Sauerstoffatom enthält und wobei die Reste R¹, R² und R³ unabhängig voneinander gegebenenfalls substituiert sind durch eine-N⁺(R¹, R²)-O⁻-Gruppe, worin R¹ und R² die bereits genannte Bedeutung haben;
wobei das Trialkyl-Amin-N-oxid (C) vorzugsweise ausgewählt ist aus der Gruppe von Tris(2-hydroxyethyl)aminoxid, Tris(2-hydroxypropyl)aminoxid, Methyl-bis(2-hydroxyethyl)-aminoxid, Ethyl-bis-(2-hydroxyethyl)aminoxid, Dimethyl-2-hydroxyethylaminoxid, Diethyl-2-hydroxyethylaminoxid, Dimethyl-2-hydroxypropylaminoxid, N-Methyl-morpholinoxid, N-Methyl-piperidinoxid, N,N,N',N'-Tetrakis(2-hydroxypropyl)-ethylendiamindioxid, N,N,N',N'-Tetrakis(2-hydroxyethyl)-ethylendiamindioxid, N-(2-Hydroxyethyl)-morpholinoxid und N-(2,3-Dihydroxypropyl)-morpholinoxid.

Für das nichtionische Tensid (D) gibt es vier Alternativen a) bis d), welche nachfolgend anhand der Figuren (IIa) bis (IId) erläutert werden.
a) Das nichtionische Tensid (D) ist in einer Ausführungsform eine Verbindung der allgemeinen Formel (IIa), 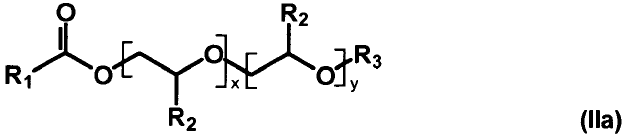 wobei
   R₁ Alkyl- oder Alkenyl-Reste mit 6 bis 22, sowie Gemische dieser Reste,
   R² Wasserstoff oder eine Methylgruppe,
   R³ Wasserstoff oder Alkylgruppen mit 1 bis 6 Kohlenstoffatomen und
   x und y Zahlen von 1 bis 25, [Alkoxylierungsgrade], bedeuten. Alkoxilierungsgrad bedeutet in anderen Worten die Anzahl der jeweiligen Alkoxygruppen.

   Als bevorzugte Vertreter des Rests R¹ bei Formel (IIa) werden z. B. Capronyl-, Caprinyl-, Decyl-, Undecenyl-, Lauryl-, Myristyl-, Palmityl-, Stearyl-, Oleyl-, Ricinolyl-, Elaidyl-, Linolyl-, Linolenyl- und Erucylreste, sowie Gemische dieser Reste eingesetzt.
   Wenn der Rest R³ in Formel (IIa) Wasserstoff ist, stellen diese Verbindungen (IIa) Polyalkylenglykol-α-monofettsäureester oder wenn R³ eine Alkylgruppe ist, stellen sie hingegen Polyalkylenglykol-α-fettsäureester-ω-alkylether dar.
b) Alternativ ist das nichtionische Tensid (D) ein N-n-Alkyl-N,N-polyoxyalkylen-amin-monofettsäureester der allgemeinen Formel (IIb), 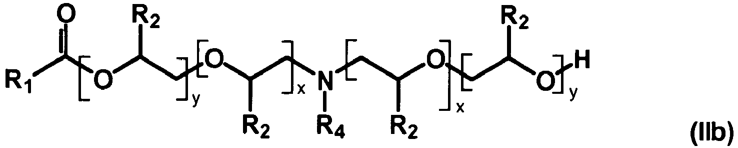 wobei R₄ Alkylgruppen mit 1 bis 6 Kohlenstoffatomen ggf. angebunden über Heteroatome, vorzugsweise Sauerstoff, wie -[CH₂-CH(R₂)-O]ₓ-[CH₂-CH(R₂)-O]_{y}-H bedeutet und die Reste R¹ und R² sowie die Alkoxylierungsgrade x und y die bereits oben zur Formel (IIa) genannten Bedeutungen haben.
   Als bevorzugte Vertreter des Rests R¹ bei Formel (IIb) werden analog zu (IIa) z. B. Capronyl-, Caprinyl-, Decyl-, Undecenyl-, Lauryl-, Myristyl-, Palmityl-, Stearyl-, Oleyl-, Ricinolyl-, Elaidyl-, Linolyl-, Linolenyl- und Erucylreste, sowie Gemische dieser Reste eingesetzt.
   Als besonders bevorzugte Vertreter der Formel (IIb) werden eingesetzt:
   (N-Methyl-N,N-decaoxyethylen-amin-monooctadecansäureester),
   (N-Ethyl-N,N-decaoxyethylen-amin-monooctadecansäureester),
   (N-Propyl-N,N-decaoxyethylen-amin-monooctadecansäureester) und
   (N-Hexyl-N,N-decaoxyethylen-amin-monooctadecansäureester).
c) Alternativ ist das nichtionische Tensid (D) ein N-n-Alkyl-N,N-polyoxyalkylen-aminoxid-monofettsäureester der allgemeinen Formel (IIc), 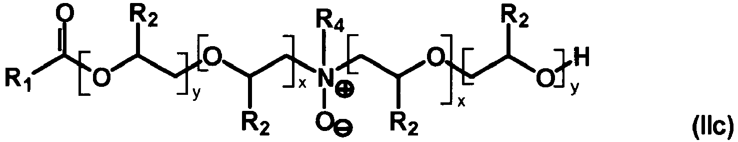 wobei R₄ Alkylgruppen mit 1 bis 6 Kohlenstoffatomen ggf. angebunden über Heteroatome, vorzugsweise Sauerstoff, wie -[CH₂-CH(R₂)-O]ₓ[CH₂-CH(R₂)-O]_{y}-H bedeuten und die Reste R¹ R² sowie die Alkoxylierungsgrade x und y die bereits oben zur Formel (IIa) genannten Bedeutungen haben.
   Als bevorzugte Vertreter des Rests R¹ bei Formel (IIc) werden analog zu (IIa) z. B. Capronyl-, Caprinyl-, Decyl-, Undecenyl-, Lauryl-, Myristyl-, Palmityl-, Stearyl-, Oleyl-, Ricinolyl-, Elaidyl-, Linolyl-, Linolenyl- und Erucylreste, sowie Gemische dieser Reste eingesetzt.
   Als besonders bevorzugte Vertreter der Formel (IIc) werden eingesetzt:
   (N-Methyl-N,N-decaoxyethylen-aminoxid-monooctadecansäureester),
   (N-Ethyl-N, N-decaoxyethylen-aminoxid-monooctadecansäureester),
   (N-Propyl-N,N-decaoxyethylen-aminoxid-monooctadecansäureester) und
   (N-Hexyl-N, N-decaoxyethylen-aminoxid-monooctadecansäu reester).
d) Alternativ ist das nichtionische Tensid (D) ein Fettsäure-bis-(polyoxyalkylen)-amid der allgemeinen Formel (IId), 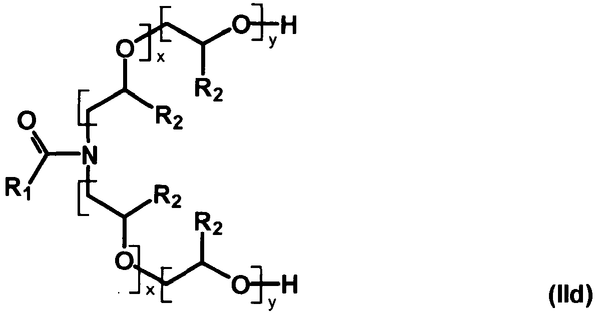 wobei die Reste R₁, R₂ sowie die Alkoxylierungsgrade x und y die bereits oben zur Formel (IIa) genannten Bedeutungen haben.

Als bevorzugte Vertreter des Rests R₁ bei Formel (IId) werden analog zu (IIa) z. B. Capronyl-, Caprinyl-, Decyl-, Undecenyl-, Lauryl-, Myristyl-, Palmityl-, Stearyl-, Oleyl-, Ricinolyl-, Elaidyl-, Linolyl-, Linolenyl- und Erucylreste, sowie Gemische dieser Reste eingesetzt.

Bei der Auswahl des nichtionischen Tensides (D) ist darauf zu achten, dass der HLB - Wert (Hydrophile - Lipophile - Balance = hydrophiles - hydrophobes Gleichgewicht) zwischen 10 und 12, vorzugsweise um 11 liegt, d.h. dieses nichtionische Tensid ist wasserlöslich, kann aber auch in organischen Flüssigkeiten entsprechend ihrer Struktur in unterschiedlichen Konzentrationen löslich sein. Die Gebrauchswerteigenschaften des jeweilig ausgewählten nichtionischen Tensids muß in der Lage sein, mit dem jeweils mit dem zur Hydrophobierung eingesetzten Alkyltrialkoxysilan (A) eine Öl-in-Wasser-Emulsion (Alkyltrialkoxysilan-in-Wasser-Emulsion) zu bilden.

Die genannten Komponenten (B) bis (E) sind jeweils unabhängig voneinander als Einzelstoff oder als Mischung verschiedener Einzelstoffe enthalten.

### Aufbau/Struktur des hydrophobierenden Dispersionsgels

Das Aminoxid (C) zusammen mit der verzweigten Polyacrylsäure (B) und einem Teil des Wassers (E) stellen die Grundkomponenten des Dispersionsgels dar. Sie formen ein erstes hydrophiles Gel aus, welches die Grundstruktur bildet. Die polyanionische Polyacrylsäure (B) und der kationische Gleichgewichtsanteil des Aminoxids interagieren durch Protonierung mittels Polyacrylsäure. Das Tensid (D) und das Wasser (E), sowie gegebenenfalls der zusätzliche Alkohol, sind zusammen mit dem Silan (A) auf Grund ihres polaren Charakters und ihrer Fähigkeit zur Ausbildung von Wasserstoffbrückenbindungen in der Lage, das Gesamtsystem zu stabilisieren.

Beispielsweise lässt sich anhand der Menge an Wasser (E), mit der Auswahl der nichtionischen Tenside (D), der Konzentrationsverhältnisse, mit den Alkoholen, die jeweils gewünschte Viskosität der Zubereitung einstellen und permanent erhalten, wenn man Eintrocknungsverluste vermeidet. Die erfindungsgemäßen Dispersionsgele werden wie oben bereits erwähnt auf Viskositäten von 3.500 bis 6.000 mPa s, vorzugsweise von 4.000 bis 5.000 mPa s, eingestellt.

Neben der Einstellung der Viskosität, kann man damit auch die Gebrauchswerteigenschaften verändern, d.h. einmal die Haftung des Dispersionsgels an der Mineraloberfläche positiv oder negativ verändern, zum anderen können damit auch die Eindringgeschwindigkeiten des Dispersionsgels an der Mineraloberfläche variiert werden (Mineraloberfläche = Oberfläche eines mineralischen Materials).

Durch weitere Zusätze, wie kationische oder zwitterionische Tenside bzw. Katalysatoren aber auch Schönungsmittel, wie Siliconöle, kann die Mineraloberfläche zusätzlich ausgerüstet werden. Solche Zusätze toleriert das aufgebaute hydrophobierende Dispersionsgel; die Alkyltrialkoxysilan-in-Wasser-Emulsion hat sich in das im ersten Schritt aufgebaute hydrophile Gel durch hydrophile Wechselwirkungskräfte thermodynamisch stabil eingebaut.

Sind Wasserverluste im System des hydrophobierenden Dispersionsgel eingetreten, so können diese durch Wasserzusatz allein oder durch Zusatz von wässrigen Alkoholmischungen korrigiert und der ursprüngliche Zustand wieder hergestellt werden (reversibler Vorgang).

Entscheidend für die Lagerstabilität des hydrophobierenden Dispersionsgels sind bei der Herstellung die Auswahl der Einzelkomponenten und ihr prozentualer Anteil im Gesamtsystem, sowie der daraus resultierende pH-Wert, der im Allgemeinen um den Neutralpunkt liegt (pH = 6,5 bis 7,5). Dadurch wird eine vorzeitige Schädigung bzw. Zersetzung der Organosiliciumverbindungen bei der Lagerung bei üblicher Umgebungstemperatur (5° bis 30°C) vermieden.

### Herstellung des hydrophobierenden Dispersionsgels

Die Herstellung des hydrophobierenden Dispersionsgels sollte zweckmäßigerweise nach einem definierten Verfahren erfolgen - dies ist aber nicht zwingend.

Bevorzugt wird ein Verfahren zur Herstellung eines hydrophobierenden Dispersionsgels eingesetzt, welches dadurch gekennzeichnet ist, dass zunächst die Komponenten (B) und (C) und bis zu 20% der Komponente (E), sowie gegebenenfalls weitere Zusätze, vorzugsweise Alkohole, bei Temperaturen zwischen 0°C und 50°C, vorzugsweise zwischen 15°C und 30°C zu einem hydrophilen Zwischenprodukt -dem hydrophilen Gel- miteinander verrührt werden und dem Zwischenprodukt anschließend unter fortgesetztem Rühren die Komponente (A), sowie schrittweise die Komponente (D) und ebenfalls schrittweise der verbleibende Anteil der Komponente (E) zugesetzt werden, wodurch sich eine multiple Dispersion ausbildet.

Die Erzeugung des hydrophilen Zwischenprodukts ergibt ein Vorquellen der hochverzweigten Polyacrylsäure (B), so dass sie sich im späteren Verlauf besser entfalten kann. Diesem Zwischenprodukt werden anschließend unter Rühren die Komponente (A) [Alkyltrialkoxysilan], sowie die Komponente (D) [nichtionisches Tensid] und der verbleibende Anteil der Komponente (E) [Wasser] zugesetzt, wodurch sich das hydrophobierende Dispersionsgel ausbildet. Vorzugsweise wird zuerst die Komponente (A) dem Zwischenprodukt/dem vorgequollenen Gel zugefügt, wobei durch das Rühren das vorgequollene Gel im Volumen der Komponente (A) verteilt wird. Anschließend erfolgt die Zugabe des verbleibenden Anteils der Komponente (E) [Wasser] und Komponente (D) [nichtionisches Tensid] erfolgt.

Möglich ist auch, die Komponente (A) gleich zu Beginn einzusetzen. Wie bereits erwähnt ist ein definiertes Verfahren nicht zwingend erforderlich. Versucht man beispielsweise eine Zubereitung ohne die Komponente (A), gelingt dies zwar, aber die nachträgliche Einarbeitung des Wirkstoffes, d.h. der Komponente (A) ist langwieriger. Die Zumischung ist mit einem erhöhten Zeit- bzw. Energieaufwand verbunden.

Während des Herstellungsprozesses wird einmal ein hydrophiles Gel aufgebaut und zum anderen wird eine Öl-in-Wasser-Emulsion gebildet, wobei (A) das Öl repräsentiert. Diese beiden Systeme treten in ihrer Gesamtheit in unterschiedliche Wechselwirkungen, wobei schließlich ein multiples disperses System entsteht, das hydrophobierende Dispersionsgel. Das Dispersionsgel ist gebrauchsfertig, sobald sich ein einheitliches System ausgebildet hat, in welchem optisch mit dem Auge keine zwei Phasen mehr zu unterscheiden sind, d.h. keine Trennung zwischen dem hydrophilen Gel und der hydrophobierenden Dispersionsflüssigkeit mehr sichtbar ist.

Die auf diesem Weg erhältlichen Dispersionsgele weisen wie oben erwähnt Viskositäten von 3.500 bis 6.000 mPa s, vorzugsweise von 4.000 bis 5.000 mPa s, auf.

### Verwendung

Verwendet wird das hydrophobierende Dispersionsgels zur Hydrophobierung von mineralischen Materialien, vorzugsweise von Beton, Leichtbeton, Ziegel, Naturstein, Porenbeton, Betonwerkstein oder Stahlbetonkonstruktionen, durch Auftrag auf deren Oberflächen.

Wie oben erläutert gibt es hierbei Vorzugsoptionen hinsichtlich der eingesetzten Menge des Alkyltrialkoxysilans (A):
1) für die Anwendung bei Ziegel, Naturstein, Porenbeton, Betonwerkstein, ist bevorzugt, dass die Komponente (A) in 5,0-30 Gew.-% enthalten ist, wobei die Gesamtmenge aller Komponenten 100 Gew.-% ist.
2) für die Anwendung bei Beton ist bevorzugt, dass die Komponente (A) in 30 bis weniger als 50 Gew.-% enthalten ist, wobei die Gesamtmenge aller Komponenten 100 Gew.-% ist.

Generell besteht keine Beschränkung hinsichtlich der zu behandelnden Materialien, d.h. alle Materialien von Beton bis Naturstein können behandelt werden. Die mineralischen Materialien umfassen dabei auch Stahlbetonkonstruktionen, die im Inneren durch Bewehrungsstäbe stabilisiert sind, beispielsweise Stahlbetonkonstruktionen wie Brückenpfeiler, Tiefgaragen und Gebäude.

Vorzugsweise weisen die mineralischen Materialien einen alkalischen pH-Wert von ≥9 auf. Bei nicht von sich aus alkalischen Materialien wie Ziegel oder Naturstein ist bei fehlender Alkalität gegebenenfalls die Zugabe eines Katalysators erforderlich (Dialkylzinnverbindung, insbesondere Dibutylzinndilaurat oder Dioctylzinndilaurat.). Diese Katalysatoren werden vorzugsweise mit Gehalten im Bereich 0,007 -1 Gew.-% eingesetzt (Gesamtmenge aller Komponenten 100 Gew.-%). Die Konzentration hängt vom Silantyp und der Anwendung ab.

Die Anwendung des Dispersionsgels bzw. das daraus gebildete Polysiloxan reduziert drastisch die Aufnahme wässriger Lösungen, gegebenenfalls mit gelösten werkstoffschädigenden chemischen Verbindungen. Auf diese Weise können Korrosionsprozesse unterbunden beziehungsweise ihr Fortschritt zeitlich verzögert werden.

Das hydrophobierende Dispersionsgel stellt ein einfach zu handhabendes Produkt dar, welches nach den üblichen Methoden der Oberflächenbeschichtung, beispielsweise Streichen, Rollen, Rakeln oder Sprühen an horizontalen bzw. vertikalen Oberflächengebilden von Betonbauwerken mit stabilem Untergrund aufgebracht werden kann und schließlich vollständig von diesem adsorbiert wird. Verfärbungen nach der unmittelbaren Adsorption der Zubereitung auf insbesondere Sichtbetonoberflächen werden im Vergleich zu Produkten nach dem Stand der Technik nicht beobachtet bzw. nur in einem Maße beobachtet, in welchem die Optik des Betons nicht nachhaltig beeinträchtigt ist. Bei Auftrag werden ca. 200 bis 600 g/m² eingesetzt, wobei die Auftragsstärke ca. 0,5 bis 5 mm, vorzugsweise ca. 1, mm beträgt, um eine Eindringtiefe von ≥ 3 mm zu erzielen.

Das Dispersionsgel dringt unmittelbar nach der Aufbringung auf die Betonoberfläche sofort und ohne Widerstand in die Oberfläche ein, wobei die Eindringzeit durch die Zusammensetzung des Gels beeinflusst werden kann, und erreicht bei praxisüblichen Betonen (W/Z 0,40-0,60) wirksame Eindringtiefen in die Betonrandzone von ≥3mm ≥2 mg Polysiloxan pro Gramm Beton). Dies gilt bei Betonen, die bei 20°C und 65% relativer Feuchte bis zum Gleichgewichtszustand gelagert wurden. Darüber hinaus ist auch eine Blockade der in die Oberfläche eindringenden Wirkstofffront nicht zu beobachten, da es durch die Formulierungsbestandteile zu keiner Bildung einer Barriereschicht kommt, die ein Voranschreiten der Wirkstoff-/Hilfsstofffront in tiefere Kapillarraumbereiche verhindern würde. Ein höherer Wassergehalt ist im Gegensatz zu vielen anderen Systemen unschädlich. Aufgrund der Herstellung des hydrophoben Dispersionsgels, welche vorangehend im Detail erläutert wurde, liegt ein hydrophiles Gel, aber auch eine Öl-in-Wasser-Emulsion vor. Diese beiden Systeme weisen in der Gesamtheit unterschiedliche Wechselwirkungen auf. Durch die konkurrierenden Wechselwirkungskräfte Wasser-Dispersionsphase (Komponente A) und Wasser-Polymermatrix kann durch Wasserkontrolle bzw. weiterer Zusätze einmal die Stabilität und zum anderen die Viskosität eingestellt werden, wodurch sich auch ein Einfluss auf die Anwendungseigenschaften (Gebrauchswerteigenschaften) ergibt. Zusätzliches Wasser kann von den Systemkomponenten, beispielsweise dem hydrophilen Gel, leicht aufgenommen werden, ohne dass es zu einem Zusammenbruch des Systems kommt.

Nach dem Aufbringen des pH-Wert neutralen hydrophobierenden Dispersionsgels (pH = 6,5 bis 7,5) auf eine üblicherweise alkalische Betonkörperoberfläche stellt sich an der Grenzfläche Beton/Dispersionsgel ein pH-Wert Gleichgewicht ein, dass sich aber durch die größere Masse des Betonkörpers im Verhältnis zur Menge des aufgetragenen Dispersionsgels in Richtung alkalisches Milieu verschiebt. Dadurch wird das Dispersionsgel in seine Bestandteile zerlegt, d. h. die Polyacrylsäure wird durch das alkalische Milieu als Polyacrylat im vorderen Kapillarbereich der Betonoberfläche immobilisiert und an den kationischen Zentren des Zementsteins gebunden, während die protonierten Gleichgewichtsanteile des Aminoxids als nichtionische Aminoxide vollständig aus ihrem Bindungszustand, durch die höhere Basizität der Umgebung, freigesetzt werden. Außerhalb dieser Grenzschicht bleibt der pH-Wert, d. h. der Zustand des Dispersionsgels, zunächst erhalten. Erst im weiteren zeitlichen Verlauf der Adsorption schreitet der beschriebene Prozess voran. Als Folge der Änderung der pH-Wert Bedingungen kommt es zunehmend zur Verminderung der Viskosität des Dispersionsgels bis hin zur vollständigen Verflüssigung.

Die verflüssigte Form kann in die tiefer gelegenen Kapillarbereiche migrieren, wodurch sich auch die Eindringtiefe der Wirkstoffe verbessert. Dies ist ebenfalls eine Folge der Veränderung der chemischen Gleichgewichte und der Grenzflächenspannung in den Kapillaren des Porenraumes. Die zu diesem Zeitpunkt noch vorhandene intakte Gelschicht auf der Oberfläche verhindert durch quasi "Deckelung" der äußeren Betongrenzfläche, dass die im oberflächennahen Kapillarraum der Betonrandzone befindlichen Flüssiganteile der Zubereitung durch Rückdiffusion an die Oberfläche und Verdunstung nach außen an die Umwelt abgegeben werden können. Dadurch werden Verluste wertvoller Wirkstoffe vermieden und darüber hinaus weitere Vorteile erzielt, wie beispielsweise die Verbesserung der Gebrauchswerteigenschaften. Mit einem gegebenen Wirkstoffanteil in der Zubereitung kann so eine höhere Effizienz erreicht werden. Eine Anpassung des Wirkstoffgehaltes an die substratabhängigen Anforderungen der Hydrophobierung ist gezielt möglich, wodurch der Verbrauch an Ressourcen geschont und die ökologische Verträglichkeit verbessert wird. Sobald der Wirkstoff den Gleichgewichtszustand bezüglich seiner maximalen Eindringtiefe erreicht hat, setzt in der basischen Umgebung des Porenraums der Betonrandzone der Prozess der Hydrophobierung durch Umwandlung der Organosiliciumverbindung in ein ortsfest verankertes Oligomerkondensat ein. Danach ist der Prozess der Hydrophobausrüstung des Behandlungsobjekts im Allgemeinen abgeschlossen. Die erforderliche Kontaktzeit zum Behandlungsobjekt beträgt mindestens eine Stunde, vorzugsweise 7-72 Stunden. Sie ist abhängig von den Applikationsbedingungen, d.h. den Substrateigenschaften (z.B. Feuchtegehalt, Porosität) bzw. Oberflächenbeschaffenheiten. Im ersten Reaktionsschritt werden die Silane (A) im alkalischem Milieu durch Feuchtigkeit, die entweder im Dispersionsgel selbst oder in Form von Substrat-Hydroxylgruppen / Substrat-Hydraten im Zementstein enthalten ist, über Organosilanole bis hin zum Organosilantriol hydrolisiert. Die chemische Reaktivität, d.h. die Hydrolysegeschwindigkeit der jeweiligen Silane (A) hängt im besonderen Maße von der Struktur des organischen Alkylrestes, der Alkoxygruppen bzw. vom Substrat, sowie vom pH-Wert im Kapillarraum, der Temperatur und den weiteren Komponenten, beispielsweise Lösemittel, Tensiden, ab. Schließlich polykondensiert das Organosilantriol über Partialkondensate bis zum Oligomer weiter, welches dann seinerseits mit den noch verbleibenden Hydroxylgruppen des Oligomeren, pro Monomereinheit eine, und mit den Hydroxylgruppen des Substrats zunächst unter Wasserstoffbrückenbindung und dann weiter bis hin zur Polykondensation kovalente Bindungen zwischen organischem und anorganischem Material eingeht, den Kapillarraum der Betonrandzone erfüllt und hydrophob ausrüstet. Je nach Reaktivität der Silane und der Alkalität des Substrates nimmt die gesamte Prozedur der Hydrophobierung im Allgemeinen einen Zeitraum von ca. 2 bis 4 Wochen in Anspruch, wobei eine wasserabweisende Wirkung wesentlich schneller erzielt wird (nach ca. 8-12h). Es wird eine Hydrophobierung erzielt, d.h. eine wirksame Eindringtiefe von mindestens 3 mm.

### Beschreibung der Abbildungen

Abb. 1: Dargestellt ist der kapillare Transport der siliciumorganischen Verbindungen in der Betonrandzone.
Abb. 2: Abb. 2 zeigt schematisch die Hydrolyse siliciumorganischer Verbindungen in der Porenlösung zementgebundener Werkstoffe (Beton).
Abb. 3: Abb. 3 gibt schematisch die Polykondensation und Anbindung der Silanole auf der Oberfläche des zementgebundenen Werkstoffes (Beton) wieder.

Nachfolgend wird die Erfindung anhand von Beispielen erläutert, ohne sie auf diese zu beschränken.

### Beispiele

Alle Mengenangaben, Anteile und Prozentanteile sind, soweit nicht anders angegeben, auf das Gewicht und die Gesamtmenge bzw. auf das Gesamtgewicht der Zubereitungen bezogen. In jedem Beispiel ergibt die Summe aller Einzelbestandteile 100 Gew.-%.

### Herstellung des hydrophobierenden Dispersionsgels

Die Komponenten verzweigte Polyacrylsäure (B) (vorzugsweise Carbopol), Aminoxid (C), Teile des Wasser (E) (maximal die Hälfte), sowie gegebenenfalls Alkohol werden gemischt und für einige Zeit stehen gelassen, bis sich ein hydrophiles Gel (Zwischenprodukt) gebildet hat. Anschließend wird dann das Silan (A) hinzugegeben. Das nichtionische Tensid (D) sowie das Restwasser (E) wird hinzugefügt, so dass sich eine erste Ö/W-Dispersion bilden kann und im weiteren Verlauf wächst das hydrophile Gel und bildet anschließend mit der Dispersion das stabile hydrophobierende Dispersionsgel. Das Gemisch wird leicht gerührt, damit sich durch diesen Energieeintrag das disperse System schneller bildet. Wenn sich eine weiße opake cremeartige Mischung gebildet hat, ist der Herstellungsprozess abgeschlossen.

### Beispiel 1:

| | |
|---|---|
| 30 Gew.-% | Isooctyltriethoxysilan |
| 0,3 Gew.-% | Carbopol ETD 2020 |
| 1 Gew.-% | 70 %iges wäßriges N-Methylmorpholinoxid |
| 63,7 Gew.-% | Wasser |
| 5,0 Gew.-% | nichtionisches Tensid (IIa) Conol 5203 - Zschimmer & Schwarz - Heptaethylenglykol-α-monoölsäureester-ω-methylether |

### Beispiel 2:

| | |
|---|---|
| 30 Gew.-% | Isooctyltriethoxysilan |
| 0,3 Gew.-% | Carbopol ETD 2020 |
| 1 Gew.-% | 70 %iges wäßriges N-Methylmorpholinoxid |
| 63,1 Gew.-% | Wasser |
| 5,6 Gew.-% | nichtionisches Tensid (IIa) (Berol 828 - Rizinusöl + 15 Ethylenoxideinheiten) |

### Beispiel 3:

| | |
|---|---|
| 10 Gew.-% | Organofunktionelles Polysiloxan - TEGOSIVIN HL 101 |
| 0,3 Gew.-% | Carbopol ETD 2020 |
| 1 Gew.-% | 70 %iges wäßriges N-Methylmorpholinoxid |
| 82,2 Gew.-% | Wasser |
| 6,5 Gew.-% | nichtionisches Tensid (IId) - Octadecansäure-bis(oxyethylenpentaoxypropylen)-amid |

### Beispiel 4:

| | |
|---|---|
| 10 Gew.-% | Organofunktionelles Polysiloxan - TEGOSIVIN HL 101 |
| 0,25 Gew.-% | Carbopol ETD 2020 |
| 1 Gew.-% | 70 %iges wäßriges N-Methylmorpholinoxid |
| 25 Gew.-% | Propylenglykol-1,2 |
| 58,75 Gew.-% | Wasser |
| 5 Gew.-% | nichtionisches Tensid - (IIa) Conol 5203 - Zschimmer & Schwarz - Heptaethylenglykol-α-monoölsäureester-ω-methylether |

### Beispiel 5:

| | |
|---|---|
| 30 Gew.-% | Isooctyltriethoxysilan |
| 0,3 Gew.-% | Carbopol ETD 2020 |
| 1 Gew.-% | 70 %iges wäßriges N-Methylmorpholinoxid |
| 25 Gew.-% | Glyzerin |
| 38,2 Gew.-% | Wasser |
| 5,5 Gew.-% | nichtionisches Tensid (IIa) (Berol 828 - Rizinusöl + 15 Ethylenoxideinheiten) |

### Beispiel 6:

| | |
|---|---|
| 30 Gew.-% | Isooctyltriethoxysilan |
| 0,3 Gew.-% | Carbopol ETD 2020 |
| 1 Gew.-% | 70 %iges wäßriges N-Methylmorpholinoxid |
| 20 Gew.-% | Propylenglykol-1,2 |
| 42,7 Gew.-% | Wasser |
| 6 Gew.-% | nichtionisches Tensid (IIa) Conol 5203 - Zschimmer & Schwarz - Heptaethylenglykol-α-monoölsäureester-ω-methylether |

### Beispiel 7:

| | |
|---|---|
| 10 Gew.-% | Organofunktionelles Polysiloxan - TEGOSIVIN HL 101 |
| 0,3 Gew.-% | Carbopol ETD 2020 |
| 1 Gew.-% | 70 %iges wäßriges N-Methylmorpholinoxid |
| 20 Gew.-% | Glyzerin |
| 60,6 Gew.-% | Wasser |
| 8,1 Gew.-% | nichtionisches Tensid (IId) - Octadecansäure-bis(oxyethylenpentaoxypropylen)-amid |

### Beispiel 8:

| | |
|---|---|
| 30 Gew.-% | Isooctyltriethoxysilan |
| 0,25 Gew.-% | Carbopol ETD 2020 |
| 1 Gew.-% | 70 %iges wäßriges N-Methylmorpholinoxid |
| 40 Gew.-% | Glyzerin |
| 19,75 Gew.-% | Wasser |
| 6 Gew.-% | nichtionisches Tensid (IId) - Octadecansäure-bis(oxyethylenpentaoxypropylen)-amid |
| 3 Gew.-% | nichtionisches Tensid (IIa) Conol 5203 - Zschimmer & Schwarz - Heptaethylenglykol-α-monoölsäureester-ω-methylether |

### Beispiel 9:

| | |
|---|---|
| 30 Gew.-% | Isooctyltriethoxysilan |
| 0,3 Gew.-% | Carbopol ETD 2020 |
| 1 Gew.-% | 70 %iges wäßriges N-Methylmorpholinoxid |
| 40 Gew.-% | Propylenglykol-1,2 |
| 19,7 Gew.-% | Wasser |
| 5 Gew.-% | nichtionisches Tensid (IId) - Octadecansäure-bis(oxyethylenpentaoxy propylen)-amid |
| 4 Gew.-% | nichtionisches Tensid (IIa) Conol 5203 - Zschimmer & Schwarz - Heptaethylenglykol-α-monoölsäureester-ω-methylether |

### Beispiel 10:

| | |
|---|---|
| 20 Gew.-% | Isooctyltriethoxysilan |
| 0,25 Gew.-% | Carbopol ETD 2020 |
| 1 Gew.-% | 70 %iges wäßriges N-Methylmorpholinoxid |
| 73,75 Gew.-% | Wasser |
| 5 Gew.-% | nichtionisches Tensid (IIa) Conol 5203 - Zschimmer & Schwarz - Heptaethylenglykol-α-monoölsäureester-ω-methylether |

### Beispiel 11:

| | |
|---|---|
| 5 Gew.-% | Isooctyltriethoxysilan |
| 0,25 Gew.-% | Carbopol ETD 2020 |
| 1 Gew.-% | 70 %iges wäßriges N-Methylmorpholinoxid |
| 88,75 Gew.-% | Wasser |
| 5 Gew.-% | nichtionisches Tensid (IId) - Octadecansäure-bis(oxyethylen-pentaoxy-propylen)-Amid |

### Beispiel 12:

| | |
|---|---|
| 20 Gew.-% | Isooctyltriethoxysilan |
| 0,25 Gew.-% | Carbopol ETD 2020 |
| 1 Gew.-% | 70 %iges wäßriges N-Methylmorpholinoxid |
| 73,75 Gew.-% | Wasser |
| 5 Gew.-% | nichtionisches Tensid (IIa) (Chremophor CO 40 - Rizinusöl + 40 Ethylenoxid-einheiten) |

### Beispiel 13:

| | |
|---|---|
| 15Gew.-% | Isooctyltriethoxysilan |
| 0,4 Gew.-% | Carbopol ETD 2020 |
| 1 Gew.-% | 70 %iges wäßriges N-Methylmorpholinoxid |
| 25 Gew.-% | Propylenglykol-1,2 |
| 53,6 Gew.-% | Wasser |
| 5 Gew.-% | nichtionisches Tensid (IId) - Octadecansäure-bis(oxyethylen-pentaoxy propylen)-Amid |

### Beispiel 14:

| | |
|---|---|
| 10 Gew.-% | Organofunktionelles Polysiloxan - TEGOSIVIN HL 101 |
| 0,25 Gew.-% | Carbopol ETD 2020 |
| 1 Gew.-% | 70 %iges wäßriges N-Methylmorpholinoxid |
| 25 Gew.-% | Propylenglykol-1,2 |
| 58,75 Gew.-% | Wasser |
| 5 Gew.-% | nichtionisches Tensid (IIa) (Chremophor CO 40 - Rizinusöl + 40 Ethylenoxid- einheiten) |

### Beispiel 15:

| | |
|---|---|
| 20 Gew.-% | Isooctyltriethoxysilan |
| 0,5 Gew.-% | Carbopol ETD 2020 |
| 1 Gew.-% | 70 %iges wäßriges N-Methylmorpholinoxid |
| 25 Gew.-% | Glyzerin |
| 58,75 Gew.-% | Wasser |
| 4 Gew.-% | Octadecyl-di(polyoxyalkylen)ammonio-propansulfonat (Polyoxyaklkylen = 9 Ethylenoxideinheiten) |
| 5 Gew.-% | nichtionisches Tensid (IIa) (Chremophor CO 40 - Rizinusöl + 40 Ethylenoxid-einheiten) |

### Beispiel 16:

| | |
|---|---|
| 20 Gew.-% | Isooctyltriethoxysilan |
| 0,5 Gew.-% | Carbopol ETD 2020 |
| 1 Gew.-% | 70 %iges wäßriges N-Methylmorpholinoxid |
| 25 Gew.-% | Glyzerin |
| 44,5 Gew.-% | Wasser |
| 5 Gew.-% | nichtionisches Tensid (IId) - Octadecansäure-bis(oxyethylenpentaoxypropylen)-Amid |
| 4 Gew.-% | nichtionisches Tensid (IIa) (Chremophor CO 40 - Rizinusöl + 40 Ethylenoxid-einheiten) |

### Beispiel 17:

| | |
|---|---|
| 10 Gew.-% | Organofunktionelles Polysiloxan - TEGOSIVIN HL 101 |
| 0,25 Gew.-% | Carbopol ETD 2020 |
| 1 Gew.-% | 50 %iges wäßriges Triisopropanolaminoxid |
| 83,75 Gew.-% | Wasser |
| 5 Gew.-% | nichtionisches Tensid (IIa) (Chremophor CO 40 - Rizinusöl + 40 Ethylenoxid-einheiten) |

### Beispiel 18:

| | |
|---|---|
| 15 Gew.-% | Organofunktionelles Polysiloxan - TEGOSIVIN HL 101 |
| 0,25 Gew.-% | Carbopol ETD 2020 |
| 1 Gew.% | 50 %iges wäßriges Triisopropanolaminoxid |
| 25 Gew.-% | Propylenglykol-1,2 |
| 53,75 Gew.-% | Wasser |
| 5 Gew.-% | nichtionisches Tensid (IIa) Conol 5203 - Zschimmer & Schwarz-Heptaethylenglykol-α-monoölsäureester-ω-methylether |

### Beispiel 19:

| | |
|---|---|
| 30 Gew.-% | Isooctyltriethoxysilan |
| 0,25 Gew.-% | Carbopol ETD 2020 |
| 1 Gew.% | 50 %iges wäßriges Triisopropanolaminoxid |
| 40 Gew.-% | Propylenglykol-1,2 |
| 23,75 Gew.-% | Wasser |
| 5 Gew.-% | nichtionisches Tensid (IIa) Conol 5203 - Zschimmer & Schwarz - Heptaethylenglykol-α-monoölsäureester-α-methylether |

### Beispiel 20:

| | |
|---|---|
| 10 Gew.-% | Isooctyltriethoxysilan |
| 0,25 Gew.-% | Carbopol ETD 2020 |
| 1 Gew.-% | 50 %iges wäßriges Triisopropanolaminoxid |
| 25 Gew.-% | Glyzerin |
| 57,75 Gew.-% | Wasser |
| 6 Gew.-% | nichtionisches Tensid (IId) - Octadecansäure-bis(oxyethylen-pentaoxy-propylen)-Amid |

### Beispiel 21:

| | |
|---|---|
| 30 Gew.-% | Isooctyltriethoxysilan |
| 0,4 Gew.-% | Carbopol ETD 2020 |
| 1 Gew.-% | 50 %iges wäßriges Triisopropanolaminoxid |
| 40 Gew.-% | Glyzerin |
| 23,6 Gew.-% | Wasser |
| 5 Gew.-% | nichtionisches Tensid (IIa) Conol 5203 - Zschimmer & Schwarz-Heptaethylenglykol-α-monoölsäureester-ω-methylether |

### Beispiel 22:

| | |
|---|---|
| 30 Gew.-% | Isooctyltriethoxysilan |
| 0,6 Gew.-% | Carbopol ETD 2020 |
| 1 Gew.-% | 50 %iges wäßriges Triisopropanolaminoxid |
| 50 Gew.-% | Propylenglykol-1,2 |
| 10,4 Gew.-% | Wasser |
| 8 Gew.-% | nichtionisches Tensid (IIa) Conol 5203 - Zschimmer & Schwarz-Heptaethylenglykol-α-monoölsäureester-ω-methylether |

### Beispiel 23:

| | |
|---|---|
| 30 Gew.-% | Isooctyltriethoxysilan |
| 0,3 Gew.-% | Carbopol ETD 2020 |
| 1 Gew.-% | 65 %iges wäßriges Triiethanolaminoxid |
| 63,7 Gew.-% | Wasser |
| 5 Gew.-% | nichtionisches Tensid (IIa) (Chremophor CO 40 - Rizinusöl + 40 Ethylenoxid-einheiten) |

### Beispiel 24:

| | |
|---|---|
| 20 Gew.-% | Isooctyltriethoxysilan |
| 0,3 Gew.-% | Carbopol ETD 2020 |
| 1 Gew.-% | 50 %iges wäßriges Dimethylethanolaminoxid |
| 72,7 Gew.-% | Wasser |
| 6 Gew.-% | nichtionisches Tensid (IIc) (N-Methyl-N,N-decaoxyethylen-aminoxid-monooctadecansäureester) |

### Beispiel 25:

| | |
|---|---|
| 25 Gew.-% | Isooctyltriethoxysilan |
| 0,3 Gew.-% | Carbopol ETD 2020 |
| 1 Gew.-% | 50 %iges wäßriges Tributylaminoxid |
| 63,7 Gew.-% | Wasser |
| 5 Gew.-% | kationisches Tensid (N-Methyl-N,N-bis-(hydroxypropylen-mono-/di-propoxylen-oxyethylen)-ammonio-essigsäure-siloxanylamid-chlorid) |
| 5 Gew.-% | nichtionisches Tensid (IIa) (Chremophor CO 40 - Rizinusöl + 40 Ethylenoxid-einheiten) |

### Beispiel 26:

| | |
|---|---|
| 20 Gew.% | Isooctyltriethoxysilan |
| 0,3 Gew.-% | Carbopol ETD 2020 |
| 1 Gew.-% | 65 %iges wäßriges Triiethanolaminoxid |
| 25 Gew.-% | Propylenglykol-1,2 |
| 44,7 Gew.-% | Wasser |
| 5 Gew.-% | nichtionisches Tensid (IIb) (N-Methyl-N,N-decaoxyethylen-aminmonooctadecansäureester) |
| 4 Gew.% | nichtionisches Tensid (IIa) (Chremophor CO 40 - Rizinusöl + 40 Ethylenoxid-einheiten) |

### Beispiel 27:

| | |
|---|---|
| 20 Gew.% | Isooctyltriethoxysilan |
| 0,3 Gew.-% | Carbopol ETD 2020 |
| 1 Gew.-% | 50 %iges wäßriges Dimethylethanolaminoxid |
| 25 Gew.-% | Propylenglykol-1,2 |
| 44,7 Gew.-% | Wasser |
| 5 Gew.-% | nichtionisches Tensid (IIb) (N-Methyl-dioxyethylen-octaoxypropylen-amin-monododecansäureester) |
| 4 Gew.-% | nichtionisches Tensid (IIa) (Chremophor CO 40 - Rizinusöl + 40 Ethylenoxid-einheiten) |

### Beispiel 28:

| | |
|---|---|
| 30 Gew.-% | Isooctyltriethoxysilan |
| 0,3 Gew.-% | Carbopol ETD 2020 |
| 1 Gew.-% | 50 %iges wäßriges Tributylaminoxid |
| 25 Gew.-% | Propylenglykol-1,2 |
| 33,7 Gew.-% | Wasser |
| 5 Gew.-% | kationisches Tensid (N-Methyl-N,N-bis-(hydroxypropylen-mono-/di-propoxylen- oxyethylen)-ammonio-essigsäure-siloxanylamid-chlorid) |
| 5 Gew.-% | nichtionisches Tensid (IIa) (Chremophor CO 40 - Rizinusöl + 40 Ethylenoxid-einheiten) |

### Beispiel 29: Anwendung eines hydrophobierenden Dispersionsgels mit einer Zusammensetzung gemäß Beispiel 22

### Herstellung der Proben

Die Anwendung des hydrophobierenden Dispersionsgels gemäß Beispiel 22 erfolgt auf einen Beton, der sich wie folgt zusammensetzt (siehe Tabelle 1).

**Tabelle 1: Rezeptur der Betonplatte**

| Betonrezeptur: W/Z Faktor 0.50 | | | |
|---|---|---|---|
| **Bezeichnung** | **Komponente** | **Massenanteile in kg/m³** | **Volumenanteil dm³/m³** |
| Sand, 0-4 mm | | 833,00 | 314,34 |
| Sand, 4-8 mm | | 370,22 | 139,71 |
| Kies, 8-16 mm | | 647,89 | 244,49 |
| Zuschlag total | | 1.851,12 | 698,54 |
| Portlandzement CEM I 42,5 | Portland CEM I 42.5 | 350,00 | 111,46 |
| Wasser | | 175,00 | 175,00 |
| Betonverflüssiger | - | - | - |
| Luftporen (angenommen) | | - | 15,00 |
| Total | | 2.376,12 | 1.000,00 |

Zur praktischen Herstellung des Betons wurden die oben aufgeführten Anteile auf ein Frischbetonvolumen von 70 Liter umgerechnet und die so festgelegten Komponenten in einem Zwangsmischer in der Reihenfolge Zuschlag, Zement und Wasser gegeben. Diese Mischung wurde anschließen für 60 Sekunden intensiv gemischt.

Diese Mischung wurde in eine Schalung, hergestellt aus Resopalplatten (ohne Schalöl), gegeben und mit einem Rütteltisch für ca 2 min verdichtet. Nach der Herstellung wurde die so gefüllte Schalung, abgedeckt mit einer PE-Folie, für 24 Stunden bei 20 °C und 65 % rel. Luftfeuchtigkeit (rel. Lf.) gelagert. Nach diesem Zeitraum wurde die Platte ausgeschalt und für 7 Tage in Leitungswasser (Netz des KIT) gelagert. Anschließend erfolgte eine Lagerung im Labor bei 20 °C und 65 % rel. Lf. Die Gesamtporosität des Betons, bestimmt mittels Quecksilberdruckporosimetrie wurde zu 13 Vol.-% bestimmt.

Auf je eine Betonplatte wurden mit dem Airless-Verfahren umgerechnet ca. 250g/m² des Hydrophobierungsmittels (Zusammensetzung gemäß Beispiel 22) auf die vertikal gelagerte Betonplatte aufgetragen. Jeweils eine Platte wurde als Referenzfläche unbehandelt belassen.

Nach 14 Tagen - während dieses Zeitraums reagiert das Silan zum wasserabweisend wirkenden und die Kapillarinnenflächen auskleidenden Siliconharz - wurden aus den Platten Bohrkerne mit einem Durchmesser von 70 mm gebohrt. Diese Bohrkerne wurden mit einer modifizierten Werkzeugmaschinenfräse in 1 mm-Schritten abgefräst.

In dem pro Frässchritt aufgefangenen Pulver wurde mittels FTIR-Spektroskopie (Methode siehe A. Gerdes, D. Oehmichen, B. Preindl and R. Nüesch, Chemical Reactivity of Silanes in Cement-Based Materials in: J. Silfwerbrand (ed.), Hydrohobe IV - Water Repellent Treatment of Building Materials, Aedificatio Publishers, Freiburg i.Br. 47-58 (2005)) der Gehalt an Isooctylpolysiloxan quantitativ bestimmt. In einem Abstand von 3 mm wurde für das hydrophobierende Dispersionsgel des Beispiels 22 ein Wirkstoffgehalt von 2,5 mg/g Beton bestimmt.

### Beispiel 30: Anwendung eines hydrophobierenden Dispersionsgels mit einer Zusammensetzung gemäß Beispiel 28

### Herstellung der Proben

Die Anwendung des hydrophobierenden Dispersionsgels gemäß Beispiel 28 erfolgt auf einen Beton, der sich wie folgt zusammensetzt.

**Tabelle 1: Rezeptur der Betonplatte**

| Betonrezeptur: W/Z Faktor 0.40 | | | |
|---|---|---|---|
| **Bezeichnung** | **Komponente** | **Massenanteile in kg/m³** | **Volumenanteil dm³**/**m³** |
| Sand, 0-4 mm | | 833,00 | 314,34 |
| Sand, 4-8 mm | | 370,22 | 139,71 |
| Kies, 8-16 mm | | 647,89 | 244,49 |
| Zuschlag total | | 1.851,12 | 698,54 |
| Portlandzement CEM I 42,5 | Portland CEM I 42.5 | 350,00 | 111,46 |
| Wasser | | 175,00 | 175,00 |
| Betonverflüssiger | - | - | - |
| Luftporen (angenommen) | | - | 15,00 |
| Total | | 2.376,12 | 1.000,00 |

Zur praktischen Herstellung des Betons wurden die oben aufgeführten Anteile auf ein Frischbetonvolumen von 70 Liter umgerechnet und die so festgelegten Komponenten in einem Zwangsmischer in der Reihenfolge Zuschlag, Zement und Wasser gegeben. Diese Mischung wurde anschließen für 60 Sekunden intensiv gemischt.

Diese Mischung wurde in eine Schalung, hergestellt aus Resopalplatten (ohne Schalöl), gegeben und mit einem Rütteltisch für ca 2 min verdichtet. Nach der Herstellung wurde die so gefüllte Schalung, abgedeckt mit einer PE-Folie, für 24 Stunden bei 20 °C und 65 % rel. Luftfeuchtigkeit gelagert. Nach diesem Zeitraum wurde die Platte ausgeschalt und für 7 Tage in Leitungswasser (Netz des KIT) gelagert. Anschließend erfolgte eine Lagerung im Labor bei 20 °C und 80 % rel. Lf. Die Gesamtporosität des Betons, bestimmt mittels Quecksilberdruckporosimetrie wurde zu 6 Vol.% bestimmt.

Auf je eine Betonplatte wurden mit dem Airless-Verfahren umgerechnet ca. 250g/m² des Hydrophobierungsmittels (Zusammensetzung gemäß Beispiel 2) auf die vertikal gelagerte Betonplatte aufgetragen. Jeweils eine Platte wurde als Referenzfläche unbehandelt belassen.

Nach 14 Tagen - während dieses Zeitraums reagiert das Silan zum wasserabweisend wirkenden und die Kapillarinnenflächen auskleidenden Siliconharz - wurden aus den Platten Bohrkerne mit einem Durchmesser von 70 mm gebohrt. Diese Bohrkerne wurden mit einer modifizierten Werkzeugmaschinenfräse in 1 mm-Schritten abgefräst.

In dem pro Frässchritt aufgefangenen Pulver wurde mittels FTIR-Spektroskopie (Methode siehe A. Gerdes, D. Oehmichen, B. Preindl and R. Nüesch, Chemical Reactivity of Silanes in Cement-Based Materials in: J. Silfwerbrand (ed.), Hydrohobe IV - Water Repellent Treatment of Building Materials, Aedificatio Publishers, Freiburg i.Br. 47-58 (2005)) der Gehalt an Isooctylpolysiloxan quantitativ bestimmt. In einem Abstand von 3 mm wurde für das hydrophobierende Dispersionsgel des Beispiels 28 ein Wirkstoffgehalt von 2,5 mg/g Beton bestimmt.

Es ist herauszuheben, dass das Beispiel 28 auch bei hohen Feuchtegehalten eine akzeptable Eindringtiefe erreicht.

## Patentansprüche

1. Hydrophobierendes Dispersionsgel, umfassend bezogen auf eine Gesamtmenge von 100 Gew.-% die Komponenten:
(A) 0,1 - weniger als 50 Gew.-% Alkyltrialkoxysilan,
(B) 0,1 -1,0 Gew.-% verzweigte Polyacrylsäure,
(C) 0,5 - 2,0 Gew.-% Trialkyl-Amin-N-oxid,
(D) 3,0 -10 Gew.-% nichtionisches Tensid und
(E) 10 - 80 Gew.-% Wasser, wobei
das Alkylthrialkoxysilan (A) allein oder in Mischung aus mehreren Alkyltrialkoxysilanen oder als Partialkondensat eines oder mehrerer Alkyltrialkoxysilane vorliegt,
das Trialkyl-Amin-N-oxid (C) ein Aminoxid der allgemeinen Formel I ist, 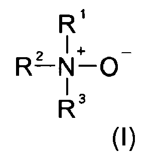 wobei R¹, R² und R³ jeweils unabhängig voneinander gleich oder verschieden sind und ausgewählt sind aus C₁-C₆-Alkylgruppen, welche unsubstituiert oder mit einer oder mehreren Hydroxylgruppen substituiert sind, wobei gegebenenfalls zwei der Reste R¹, R² und R³ miteinander einen gesättigten Ring bilden, welcher gegebenenfalls ein weiteres Sauerstoffatom enthält und wobei die Reste R¹, R² und R³ unabhängig voneinander gegebenenfalls substituiert sind durch eine -N⁺(R¹, R²)-O⁻-Gruppe, worin R¹ und R² die bereits genannte Bedeutung haben,
und
das nichtionische Tensid (D) entweder
a) ein Tensid der allgemeinen Formel (IIa) 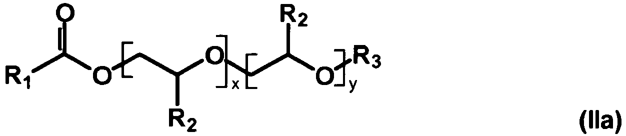 oder
b) ein Tensid der allgemeinen Formel (IIb) 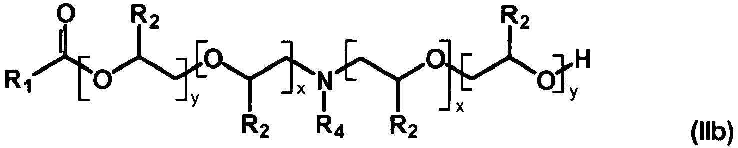 oder
c) ein Tensid der allgemeinen Formel (IIc) 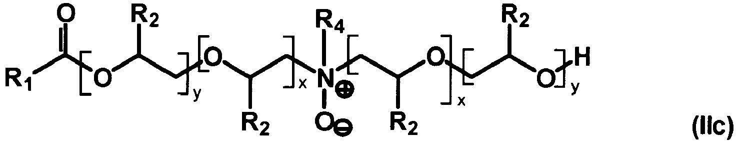 oder
d) ein Fettsäure-bis-(polyoxyalkylen)-amid der allgemeinen Formel (IId) ist, 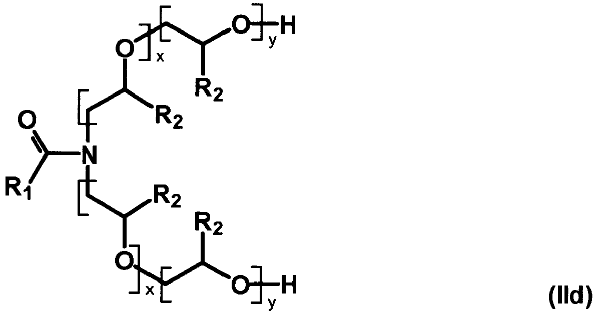 wobei die Reste R₁-R₄ des nichtionischen Tensids (D) jeweils die folgende Bedeutung haben:
R¹ Alkyl- oder Alkenyl-Reste mit 6 bis 22 Kohlenstoffatomen sowie Gemische dieser Reste,
R² Wasserstoff oder eine Methylgruppe,
R³ Wasserstoff oder Alkylgruppen mit 1 bis 6 Kohlenstoffatomen,
R₄ Alkylgruppen mit 1 bis 6 Kohlenstoffatomen ggf. angebunden über Heteroatome, vorzugsweise Sauerstoff
und x und y Zahlen von 1 bis 25.

2. Hydrophobierendes Dispersionsgel gemäß Anspruch 1, **dadurch gekennzeichnet, dass** die Komponente (A) in 5,0 bis weniger als 50 Gew.-% enthalten ist, wobei die Gesamtmenge aller Komponenten 100 Gew.-% ist.

3. Hydrophobierendes Dispersionsgel gemäß Anspruch 1 oder 2, **dadurch gekennzeichnet, dass** die Komponente (A) in 5,0-30 Gew.-% enthalten ist, wobei die Gesamtmenge aller Komponenten 100 Gew.-% ist.

4. Hydrophobierendes Dispersionsgel gemäß Anspruch 1 oder 2, **dadurch gekennzeichnet, dass** die Komponente (A) in 30 bis weniger als 50 Gew.-% enthalten ist, wobei die Gesamtmenge aller Komponenten 100 Gew.-% ist.

5. Hydrophobierendes Dispersionsgel gemäß einem der Ansprüche 1 bis 4, **dadurch gekennzeichnet, dass** zusätzlich 0,1-50 Gew.-% Alkohol enthalten sind, wobei die Gesamtmenge aller Komponenten 100% ergibt und wobei der Alkohol allein oder in Mischung vorliegt und ausgewählt ist aus der Gruppe der zweiwertigen C₂-C₆-Alkohole, der dreiwertigen C₃-C₆-Alkohole und EtheralkoholenPolyethylenglykole oder Polypropylenglykole.

6. Hydrophobierendes Dispersionsgel gemäß einem der Ansprüche 1 bis 5, **dadurch gekennzeichnet, dass** das Alkyltrialkoxysilan (A) als Alkylgruppe unverzweigte oder verzweigte C₁-C₁₆-Alkylgruppen aufweist und
als Alkyoxygruppen gleiche oder verschiedene unverzweigte oder verzweigte C₁-C₆-Alkoxygruppen aufweist.

7. Hydrophobierendes Dispersionsgel gemäß einem der Ansprüche 1 bis 6, **dadurch gekennzeichnet, dass** das Alkyltrialkoxysilan (A) 2,4,4-Trimethyl-pentyltriethoxysilan ist.

8. Hydrophobierendes Dispersionsgel gemäß einem der Ansprüche 1 bis 7, **dadurch gekennzeichnet, dass** die verzweigte Polyacrylsäure (B) ein Interpolymer der Acrylsäure ist, das mit Pentaerythrittriallylether vernetzte Polyacrylsäure darstellt.

9. Hydrophobierendes Dispersionsgel nach einem der Ansprüche 1 bis 8, **dadurch gekennzeichnet, dass** die Komponenten (B) bis (E) jeweils unabhängig voneinander als Einzelstoff oder als Mischung verschiedener Einzelstoffe enthalten sind.

10. Verfahren zur Herstellung eines hydrophobierenden Dispersionsgels nach einem der Ansprüche 1 bis 9, **dadurch gekennzeichnet, dass** zunächst die Komponenten (B) und (C) und bis zu 20% der Komponente (E), sowie gegebenenfalls weitere Zusätze bei Temperaturen zwischen 0°C und 50°C zu einem hydrophilen Zwischenprodukt miteinander verrührt werden und dem Zwischenprodukt anschließend unter fortgesetztem Rühren die Komponente (A), sowie schrittweise die Komponente (D) und ebenfalls schrittweise der verbleibende Anteil der Komponente (E) zugesetzt werden, wodurch sich eine multiple Dispersion ausbildet.

11. Verwendung eines hydrophobierenden Dispersionsgels nach einem der Ansprüche 1 bis 9 zur Hydrophobierung von mineralischen Materialien durch Auftrag auf deren Oberflächen.

## Claims

1. A hydrophobing dispersion gel, comprising, in relation to a total amount of 100 % by weight, the following components:
(A) 0.1 - less than 50 % by weight of alkyltrialkoxysilane,
(B) 0.1 - 1.0 % by weight of branched polyacrylic acid,
(C) 0.5 - 2.0 % by weight of trialkyl-amine-N oxide,
(D) 3.0 - 10 % by weight of non-ionic surfactant, and
(E) 10 - 80 % by weight of water, in which
the alkyltrialkoxysilane (A) is present alone or in a mixture of a plurality of alkyltrialkoxysilanes or as a partial condensate of one or more alkyltrialkoxysilanes,
the trialkyl-amine-N oxide (C) is an amine oxide of general formula I, 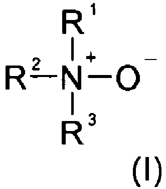 in which R¹, R² and R³, independently of one another, are the same or different and are selected from C₁-C₆ alkyl groups, which are unsubstituted or are substituted with one or more hydroxyl groups, two of the groups R¹, R² and R³ together forming a saturated ring as appropriate, which possibly contains a further oxygen atom, and in which the groups R¹, R² and R³ are substituted independently of one another, as appropriate, by an -N⁺(R¹, R²)-O⁻ group, in which R¹ and R² have the meaning specified above,
and
the non-ionic surfactant (D) is either
a) a surfactant of general formula (IIa) 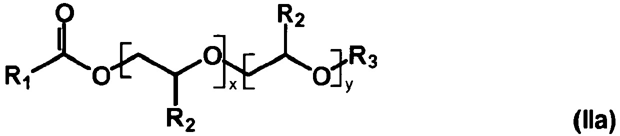 or
b) a surfactant of general formula (IIb) 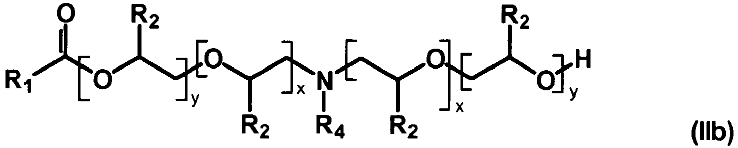 or
c) a surfactant of general formula (IIc) 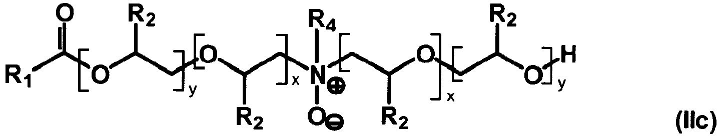 or
d) a fatty acid-bis-(polyoxyalkylene) amide of general formula (IId), 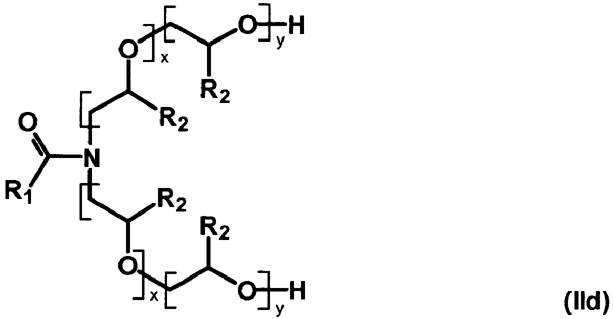 in which the groups R₁-R₄ of the non-ionic surfactant (D) each have the following meaning:
R₁ alkyl or alkenyl groups having 6 to 22 carbon atoms and also mixtures of these groups,
R₂ hydrogen or a methyl group,
R₃ hydrogen or alkyl groups having 1 to 6 carbon atoms,
R₄ alkyl groups having 1 to 6 carbon atoms, possibly bonded via heteroatoms, preferably oxygen
and x and y are numbers from 1 to 25.

2. The hydrophobing dispersion gel according to claim 1, **characterised in that** the component (A) is contained in 5.0 to less than 50 % by weight, the total amount of all components being 100 % by weight.

3. The hydrophobing dispersion gel according to claim 1 or 2, **characterised in that** component (A) is contained in 5.0-30 % by weight, the total amount of all components being 100 % by weight.

4. The hydrophobing dispersion gel according to claim 1 or 2, **characterised in that** component (A) is contained in 30 to less than 50 % by weight, the total amount of all components being 100 % by weight.

5. The hydrophobing dispersion gel according to any one of claims 1 to 4, **characterised in that**, in addition, 0.1-50 % by weight of alcohol is contained, the total amount of all components giving 100%, and the alcohol being present alone or in a mixture and being selected from the group of divalent C₂-C₆ alcohols, trivalent C₃-C₆ alcohols and ether alcohol polyethylene glycols or polypropylene glycols.

6. The hydrophobing dispersion gel according to any one of claims 1 to 5, **characterised in that** the alkyltrialkoxysilane (A) comprises, as alkyl group, unbranched or branched C₁-C₁₆ alkyl groups, and comprises,
as alkoxy groups, the same or different unbranched or branched C₁-C₆ alkoxy groups.

7. The hydrophobing dispersion gel according to any one of claims 1 to 6, **characterised in that** the alkyltrialkoxysilane (A) is 2,4,4-trimethylpentyltriethoxysilane.

8. The hydrophobing dispersion gel according to any one of claims 1 to 7, **characterised in that** the branched polyacrylic acid (B) is an interpolymer of acrylic acid, which constitutes polyacrylic acid cross-linked with pentaerythritol triallyl ether.

9. The hydrophobing dispersion gel according to any one of claims 1 to 8, **characterised in that** the components (B) to (E) are each contained independently of one another as an individual substance or as a mixture of various individual substances.

10. A method for producing a hydrophobing dispersion gel according to any one of claims 1 to 9, **characterised in that**, firstly, the components (B) and (C) and up to 20% of component (E), and further additives as appropriate are stirred with one another at temperatures between 0°C and 50°C to form a hydrophilic intermediate product, and component (A) and, in steps, component (D) and, also in steps, the remaining proportion of component (E) are then added to the intermediate product with continued stirring, whereby a multiple dispersion forms.

11. Use of a hydrophobing dispersion gel according to any one of claims 1 to 9 for the hydrophobing of mineral materials by application to the surfaces of said materials.

## Revendications

1. Gel à dispersion qui confère des propriétés hydrophobes et qui comprend, par rapport à une quantité totale de 100 % en poids, les constituants suivants :
(A) 0,1 à moins de 50 % en poids d'alkyltrialkoxysilane,
(B) 0,1 à 1,0 % en poids d'acide polyacrylique ramifié,
(C) 0,5 à 2,0 % en poids de trialkylamine-N-oxyde,
(D) 3,0 à 10 % en poids d'agent tensioactif non ionique, et
(E) 10 à 80 % poids d'eau,
l'alkyltrialkoxysilane (A) se présentant sous forme d'un constituant unique ou en mélange avec plusieurs alkyltrialkoxysilanes ou sous forme d'un ou de plusieurs alkyltrialkoxysilanes ayant subi une condensation partielle,
le trialkylamine-N-oxyde (C) étant un amine-oxyde répondant à la formule générale I 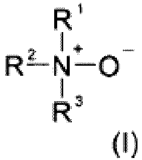 dans laquelle R¹, R² et R³. qui sont indépendamment les uns des autres identiques ou différents, sont choisis parmi les groupes alkyle en C₁-C₆ non-substitués ou bien substitués avec un ou plusieurs groupes hydroxyle alors que deux des radicaux R¹, R² et R³ peuvent éventuellement former ensemble un cycle saturé contenant éventuellement un atome d'oxygène suplémentaire, et dans laquelle les radicaux R¹, R² et R³ sont éventuellement substitués, indépendamment les uns des autres, avec un groupe -N⁺(R¹,R²)-O- dans lequel R¹ et R² ont la signification précédemment indiquée,
et
l'agent tensioactif non-ionique (D) étant soit
a) un agent tensioactif répondant à la formule générale (IIa) 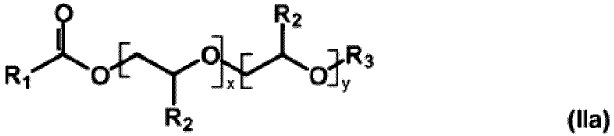 soit
b) un agent tensioactif répondant à la formule générale (IIb) 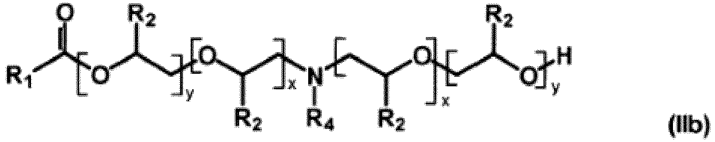 soit
c) un agent tensioactif répondant à la formule générale (IIc) 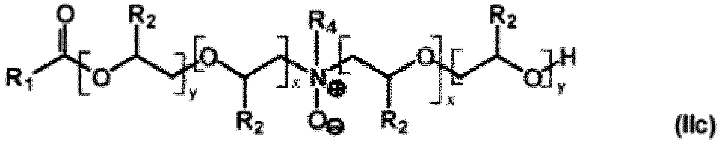 soit
d) un bis-(polyoxyalkylène)-amide d'acide gras répondant à la formule générale (IId) 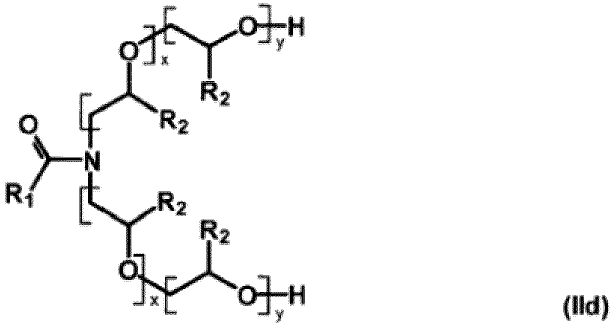 les radicaux R₁ à R₄ de l'agent non-ionique (D) ayant respectivement les significations suivantes :
R₁ radicaux alkyle ou alcényle refermant 6 à 22 atomes de carbone ainsi que les mélanges de ces radicaux,
R² hydrogène ou un groupe méthyle,
R³ hydrogène ou des groupes alkyle renfermant 1 à 6 atomes de carbone,
R₄ groupes alkyle renfermant 1 à 6 atomes de carbone éventuellement liés au travers d'hétéroatomes, s'agissant préférentiellement d'oxygène
et x et y nombres compris entre 1 et 25.

2. Gel à dispersion conférant des propriétés hydrophobes selon la revendication 1, **caractérisé en ce qu'**il contient le constituant (A) dans une proportion supérieure ou égale à 5,0 et inférieure à 50 % en poids, la quantité totale de l'ensemble des constituants étant égale à 100 % en poids.

3. Gel à dispersion conférant des propriétés hydrophobes selon les revendications 1 ou 2, **caractérisé en ce qu'**il contient le constituant (A) dans une proportion comprise entre 5,0 et 30,0 % en poids, la quantité totale de l'ensemble des constituants étant égale à 100 % en poids.

4. Gel à dispersion conférant des propriétés hydrophobes selon les revendications 1 ou 2, **caractérisé en ce qu'**il contient le constituant (A) dans une proportion supérieure ou égale à 30 et inférieure à 50 % en poids, la quantité totale de l'ensemble des constituants étant égale à 100 % en poids.

5. Gel à dispersion conférant des propriétés hydrophobes selon l'une des revendications 1 à 4, **caractérisé en ce qu'**il contient en outre 0,1 à 50 % en poids d'alcool, la quantité totale de l'ensemble des constituants étant égale à 100 % en poids, ledit alcool étant présent seul ou en mélange alors qu'il est choisi dans le groupe des alcools en C₂-C₆ divalents, des alcools en C₃-C₆ trivalents et des éther-alcools, polyéthylène glycols ou polypropylène glycols.

6. Gel à dispersion conférant des propriétés hydrophobes selon l'une des revendications 1 à 5, **caractérisé en ce que** l'alkyltrialkoxysilane (A) comporte, en tant que groupe alkyle, des groupes alkyle en C₁ à C₁₆ linéaires ou ramifiés, et
en tant que groupes alkoxy, des groupes alkoxy en C₁ à C₆ linéaires ou ramifiés de nature identique ou différente.

7. Gel à dispersion conférant des propriétés hydrophobes selon l'une des revendications 1 à 6, **caractérisé en ce que** l'alkyltrialkoxysilane (A) est le 2,4,4-triméthylpentyltriéthoxysilane.

8. Gel à dispersion conférant des propriétés hydrophobes selon l'une des revendications 1 à 7, **caractérisé en ce que** l'acide polyacrylique ramifié (B) est un interpolymère de l'acide acrylique et forme, avec du triallyléther de pentaérythritol, de l'acide polyacrylique réticulé.

9. Gel à dispersion conférant des propriétés hydrophobes selon l'une des revendications 1 à 8, **caractérisé en ce qu'**il contient les constituants (B) à (E), indépendamment les uns des autres, sous forme d'une matière unique ou d'un mélange de différentes matières uniques.

10. Procédé de préparation d'un gel à dispersion conférant des propriétés hydrophobes selon l'une des revendications 1 à 9, **caractérisé en ce que** l'on mélange d'abord, sous agitation, les constituants (B) et (C) et jusqu'à 20 % du constituant (E) ainsi que, le cas échéant, d'autres additifs à des températures comprises entre 0 °C et 50 °C pour ainsi obtenir un produit intermédiaire hydrophile, et l'on ajoute ensuite audit produit intermédiaire, en poursuivant l'agitation, le constituant (A) ainsi que, en plusieurs étapes, le constituant (D) et, également en plusieurs étapes, la proportion restante du constituant (E), ce qui conduit à la formation d'une dispersion multiple.

11. Utilisation d'un gel à dispersion conférant des propriétés hydrophobes selon l'une des revendications 1 à 9, pour obtenir une hydrophobation de matériaux minéraux, par application sur les surfaces de ces derniers.
